# EUROPÄISCHE PATENTSCHRIFT

(11) **EP 3 948 668 B1**
(45) Veröffentlichungstag und Bekanntmachung des Hinweises auf die Patenterteilung: **20.08.2025**
(21) Anmeldenummer: 20711578.3
(22) Anmeldetag: 13.03.2020
(51) Int. Cl.: G06K 19/077, G06K 19/073, G06K 19/07, B65D 23/08, B65D 23/14, B65D 55/06

(54) **KENNZEICHNUNGSSATZ ZUM KENNZEICHNEN EINES PHARMAZEUTISCHEN GEFÄSSES UND PHARMAZEUTISCHE KONFEKTIONIERUNGSEINHEIT**
IDENTIFICATION KIT FOR IDENTIFYING A PHARMACEUTICAL VESSEL, AND PHARMACEUTICAL PACKAGING UNIT
ENSEMBLE DE CARACTÉRISATION POUR LA CARACTÉRISATION D'UN RÉCIPIENT PHARMACEUTIQUE ET UNITÉ DE CONFECTION PHARMACEUTIQUE

(30) Priorität: 29.03.2019 DE 102019108253
(43) Veröffentlichungstag der Anmeldung: 09.02.2022
(73) Patentinhaber: Schreiner Group GmbH & Co. KG, 85764 Oberschleissheim (DE)
(72) Erfinder: REHM, Arne, 80687 München (DE)
(74) Vertreter: Epping - Hermann - Fischer
(86) Internationale Anmeldenummer: PCT/EP2020/056946
(87) Internationale Veröffentlichungsnummer: WO 2020/200706

(56) Entgegenhaltungen:
- EP-B1- 2 847 082
- WO-A1-2013/167701

## Beschreibung

Die vorliegende Anmeldung betrifft einen Kennzeichnungssatz zum Kennzeichnen eines pharmazeutischen Gefäßes. Die Anmeldung betrifft ferner eine pharmazeutische Konfektionierungseinheit.

Pharmazeutische Gefäße wie etwa Vials, Ampullen, Karpulen oder Spritzen etc. benötigen zur Identifizierung ihres Inhalts, etwa von Medikamentenlösungen, ein Etikett, das meist auf eine außenseitige Umfangsfläche des Gefäßes aufgebracht wird. Die Druckschrift EP 2 847 082 B1 offenbart ein Verschlusselement für ein Gefäß mit einem pharmazeutischen Inhalt. Das Verschlusselement umfasst eine Verschlusskapsel, einen Aufreißstreifen und ein Etikett. Die Verschlusskapsel besitzt eine Mantelfläche, ein geschlossenes Ende und ein offenes Ende. Der Aufreißstreifen umfasst eine Anfasslasche zum Öffnen der Verschlusskapsel. Das Etikett besitzt oft auch noch weitere Funktionen; beispielsweise soll es oft auch anzeigen, ob das Gefäß schon einmal geöffnet worden ist oder ob ggfs. auch Manipulationen am Gefäß vorgenommen worden sind; solche Etiketten dienen dann zugleich auch der Autorisierung sowie Authentifizierung, d.h. als Echtheits- oder Herkunftsnachweis.

Die zur Etikettierung oder anderweitigen Kennzeichnung zur Verfügung stehende Oberfläche ist oft begrenzt und knapp bemessen; es existieren verschiedenste Arten von Etiketten, etwa mehrlagige Etiketten oder Booklet-Etiketten, um ausreichend Informationen auf oder an dem Gefäß unterzubringen. Meist jedoch werden zumindest für pharmazeutische Gefäße einlagige Etiketten verwendet, deren Handhabung und Verarbeitung einfacher ist.

Dennoch bleibt die Frage nach anderen Wegen, um die Kennzeichnungsfläche zu vergröBern, stets aktuell, da niemals ausgeschlossen werden kann, dass bisher noch nicht angedachte Lösungen zur Behebung des Platzmangels auf den üblicherweise recht klein dimensionierten pharmazeutischen Gefäßen existieren könnten.

Es ist die Aufgabe der vorliegenden Anmeldung, eine solche bislang neuartige Lösung zur besseren Unterbringung oder Anbringung von Informationen und/oder zur anderweitigen Kennzeichnung pharmazeutischer Gefäße bereitzustellen.

Die Aufgabe wird durch einen Kennzeichnungssatz und durch eine pharmazeutische Konfektionierungseinheit mit den Merkmalen des jeweils unabhängigen Patentanspruchs gelöst. Vorteilhafte Weiterbildungen sind in den abhängigen Patentansprüchen angegeben.

Diese Aufgabe wird durch den Kennzeichnungssatz gemäß Anspruch 1 sowie durch die pharmazeutische Konfektionierungseinheit gemäß Anspruch 15 gelöst.

Einige stellvertretende, exemplarische Ausführungsbeispiele sind nachfolgend mit Bezug auf die Figuren beschrieben. Es zeigen:
- Figur 1 und 2: zwei exemplarische pharmazeutische Gefäße, die einen Gefäßkörper mit einer Umfangsfläche und einem abnehmbaren Gefäßverschluss aufweisen,
- Figur 3: ein Ausführungsbeispiel eines Kennzeichnungssatzes, umfassend einen Gefäßaufsatz, ein Etikett und einen Transponder,
- Figur 4: den Gefäßaufsatz aus Figur 3, aufgesetzt und/oder montiert auf dem Gefäß aus Figur 1,
- Figur 5: die durch Zusammenfügung der Bestandteile des Kennzeichnungssatzes aus Figur 3 und des pharmazeutischen Gefäßes aus Figur 1 erhaltene pharmazeutische Konfektionierungseinheit gemäß einer ersten Ausführungsform,
- Figur 6: eine unter Verwendung eines Gefäßes und eines anderen Kennzeichnungssatzes erhaltene weitere Ausführungsform einer Konfektionierungseinheit mit mehreren einzeln variierbaren, jedoch hier in Kombination miteinander dargestellten Einzelmerkmalen,
- Figur 7: noch eine weitere, unter Verwendung eines Gefäßes und eines anderen Kennzeichnungssatzes erhaltene Ausführungsform einer Konfektionierungseinheit mit mehreren einzeln variierbaren, jedoch hier in Kombination miteinander dargestellten Einzelmerkmalen,
- Figur 8: ein Etikett mit einem RFID-Transponder mit einer Messleitung zur Prüfung einer Durchtrennung eines Durchtrennungsbereichs des Etiketts und
- Figur 9: eine Konfektionierungseinheit mit einem Etikett und einem RFID-Transponder ähnlich wie in Figur 8 mit einer Messleitung zur Prüfung einer Durchtrennung des Etiketts.

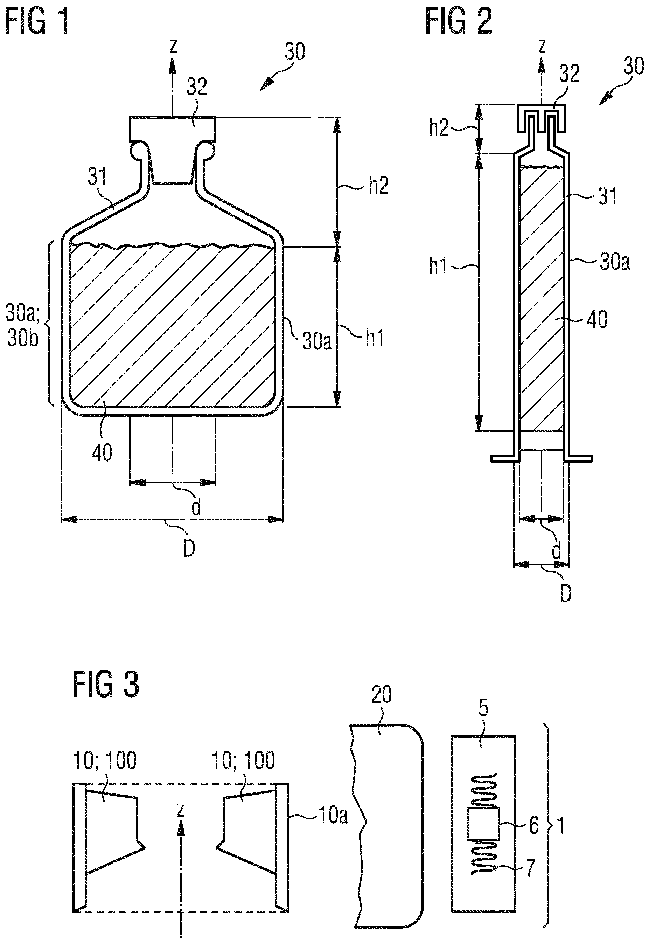

Die Figuren 1 und 2 zeigen exemplarisch zwei pharmazeutische Gefäße 30, die mit einer pharmazeutischen Flüssigkeit 40 gefüllt oder befüllbar sind und die eine Kennzeichnung erfordern. Pharmazeutische Gefäße 30 im Sinne dieser Anmeldung sind alle Gefäße, die zur Aufbewahrung, zum Transport, zur Entnahme und/oder zur Verabreichung pharmazeutischer Flüssigkeiten verwendbar sind, wobei als pharmazeutische Flüssigkeiten alle im pharmazeutischen bzw. medizinischen Bereich einsetzbaren oder zu untersuchenden Flüssigkeiten einschließlich Körperflüssigkeiten, Blutseren etc. zu verstehen sind (einschließlich Emulsionen oder anderer kombinierter Aggregatzustandsgemische; etwa solche mit Ausfällungen).

Ein pharmazeutisches Gefäß, das z.B. eine zu verabreichende Medikamentenlösung enthält, ist üblicherweise durch ein Etikett gekennzeichnet, das auf die Oberfläche des Gefäßes 30 aufgeklebt wurde. Ein pharmazeutisches Gefäß 30 umfasst in der Regel einen Gefäßkörper 31, der den Hauptbestandteil des Gefäßes 30 ausmacht, und einen abnehmbaren Gefäßverschluss 32. Pharmazeutische Gefäße oder zumindest deren Gefäßkörper sind meist symmetrisch bezüglich einer axialen Richtung z, welche oft eine Rotationssymmetrieachse des Gefäßes ist; der Gefäßkörper 31 besitzt dann eine Umfangsfläche 30a, die die axiale Richtung z umläuft. Die Umfangsfläche eines pharmazeutischen Gefäßes 30 ist insbesondere die Umfangsfläche 30a des Gefäßbauches 30b, welcher das Luftvolumen zum Befüllen mit der pharmazeutischen Flüssigkeit 40 umschließt.

Während Figur 1 als pharmazeutisches Gefäß 30 ein Vial zeigt, zeigt Figur 2 eine mit einem Luer-Lock-Gewinde versehene oder noch zu versehende Spritze; beispielsweise eine COC/COP-Spritze. Darüber hinaus können jedoch beliebige pharmazeutische Gefäße 30 mit dem vorgeschlagenen Kennzeichnungssatz ausgestattet und gekennzeichnet werden; etwa Ampullen, Karpulen, Vials, Spritzen oder sonstige Gefäße mit beliebigen Anschlüssen, etwa mit Luer-Lock-Anschlüssen bzw. Luer-Lock-Gewinden, mit Flip-Off-Verschlüssen, mit Needle-Shield- bzw. Needle-Trap-Aufsätzen oder beliebige sonstige Konfektionierungsformen pharmazeutischer Gefäße. Bei den meisten von ihnen ist der Gefäßkörper 31 ohnehin meist als Rundkörper ausgebildet; dies ist jedoch nicht unbedingt erforderlich.

Die Figuren 1 und 2 zeigen, dass der Gefäßverschluss 32 in radialer Richtung einen (Außen-)Durchmesser d besitzt, der kleiner ist als der (Außen-)Durchmesser D des (in diesen Fällen tatsächlich rotationssymmetrischen) Gefäßes 30 bzw. Gefäßkörpers 31. Insbesondere ist der Gefäßbauch 30b oft größer im Durchmesser bzw. Radius als der Verschluss 32.

Eine Kennzeichnung erfolgt daher herkömmlich meist durch ein Etikett 20, das auf die Umfangsfläche 30a des Gefäßkörpers 31 bzw. seines Bauches 30b aufgeklebt wird bzw. diesen umklebt (Überrundumetikett). Zur Vergrößerung der Etikettenfläche sind zuweilen mehrlagige Etiketten; insbesondere Booklet-Etiketten mit mehreren Blättern bzw. Folien im Einsatz. In jedem Fall hängt die Größe der zur Etikettierung und somit zur Gefäßkennzeichnung verfügbaren Oberfläche von der Größe und Geometrie des zu kennzeichnenden Gefäßes selbst ab; die etikettierbare Fläche wird meist durch den Umfang bzw. Durchmesser des Gefäßkörpers 31 bzw. Gefäßbauches 30b und durch die Höhe des Gefäßbauches 30b oder sonstigen befüllbaren Abschnitts des Gefäßes vorgegeben; diese Höhe ist in den Figuren 1 und 2 als Höhenabschnitt h1 angegeben. In einem weiteren Höhenbereich h2, in den der Verschluss 32 angeordnet ist, ist der Außendurchmesser d des Verschlusses 32 oft kleiner; teils deutlich kleiner als der Außendurchmesser D des Gefäßkörpers 31 bzw. Gefäßbauches 30b, sodass dort eine Anbringung eines Etiketts nicht oder nur ausnahmsweise oder nur in kleinen Flächenstücken der Verschlussoberfläche in Frage kommt.

Die vorliegende Anmeldung stellt einen Kennzeichnungssatz 1 bereit, mit dem solche und andere Gefäße, insbesondere pharmazeutisches Gefäßes 30 derart kennzeichenbar sind, dass eine pharmazeutische Konfektionierungseinheit 50 mit vergrößerter Kennzeichnungsfläche entsteht.

Als Kennzeichnung werden hier nicht nur Beschriftungen in Form gedruckter oder anderweitig aufgebrachter, durch Menschen oder geeignete Scangeräte (Smartphones oder sonstige Lesegeräte etc.) lesbarer Textbestandteile oder sonstiger Informationsbestandteile verstanden, wie sie mittels eines Etiketts, insbesondere Klebeetiketts an dem pharmazeutischen Gefäß 30 anbringbar sind, sondern auch elektronische Daten, die etwa in einem Transponder, insbesondere RFID-Transponder speicherbar und daraus auslesbar (ggfs. auch nachträglich einschreibbar) sind. Der Kennzeichnungssatz 1 umfasst daher ebenfalls zumindest einen RFID-Transponder, der zusätzlich zu dem Etikett am Behälter anzubringen ist oder zumindest sonst irgendwo an oder in der pharmazeutischen Konfektionierungseinheit 50, welche das pharmazeutische Gefäß 30 und den Kennzeichnungsatz 1 umfasst, anzuordnen ist.

Der anhand der nachfolgenden Figuren beschriebene Kennzeichnungsatz ermöglicht eine bessere, insbesondere platzgewinnende und daher einfachere Kennzeichnung pharmazeutischer Gefäße 30.

Figur 3 zeigt schematisch dargestellt ein exemplarisches Ausführungsbeispiel eines gemäß dieser Anmeldung bereitgestellten, neuartigen Kennzeichnungsatzes 1. Der Kennzeichnungsatzes 1 umfasst zumindest einen Gefäßaufsatz 10, ein Etikett 20 und einen RFID-Transponder 5. Der Gefäßaufsatz 10 ist als dreidimensionales Formteil 100 ausgebildet; er ist vorzugsweise ein Spritzgussteil aus Kunststoff. Vorzugsweise ist das Formteil 10; 100 oder zumindest ihre Umfangswandung 12 oder ihre äußere Umfangsfläche 10 symmetrisch, insbesondere rotationssymmetrisch bezüglich einer axialen Richtung z.

Das Formteil 100 ist dazu vorgesehen, eine Etikettierung und/oder elektronische Kennzeichnung des Gefäßes in Höhe bzw. in der Nähe des Gefäßverschlusses 32 zu ermöglichen und/oder zu erleichtern. Bei den meisten pharmazeutischen Gefäßen 30 besitzt der Gefäßverschluss 32 einen Außendurchmesser d, der kleiner ist als der Außendurchmesser D des Gefäßbauches 30b oder des sonstigen, das Flüssigkeitsvolumen 40 umschließenden Teils des eigentlichen Gefäßkörpers 31. Bei in dieser Weise geformten pharmazeutischen Gefäßen 30 ist es nicht möglich, ein Etikett von außen um den Verschluss herum anzubringen; insbesondere nicht um den Gefäßbauch und den Verschluss gemeinsam, wenn auch der Übergang zwischen Gefäßbauch und Verschluss überbrückt werden soll und das Etikett auch im Überbrückungsbereich den Umfang nahezu vollständig umlaufen soll.

Beim Überbrücken des Gefäßhalses, an dem sich der Durchmesser bzw. Radius des Gefäßes von D bis auf d verengt, ist eine Überetikettierung zumindest nicht ohne Faltenwurf, d.h. einer hohen Beschädigungsanfälligkeit für das Etikett möglich; vor allem dann nicht, wenn das Etikett oder sonstige Kennzeichnungselement den Umfang des Gefäßes vollständig oder weitgehend umrunden soll.

Zur Erreichung einer vordefinierten Relativposition relativ zum Gefäß 30 besitzt der Gefäßaufsatz 10 eine geeignete Innenkontur 11, die beispielsweise zum mechanischen Eingreifen oder Ineinandergreifen mit dem Gefäßverschluss 32, mit dem Gefäßkörper 31 oder mit beiden dient und die diese vordefinierte Relativposition zumindest vorübergehend sichert. Die endgültige Fixierung und/oder Positionierung des Gefäßaufsatzes 10 kann auch erst durch das Aufbringen des Etiketts 20 und/oder des RFID-Transponders 5 erfolgen; vorzugsweise, indem das Etikett 20 des Kennzeichnungsatzes 1 sowohl den Gefäßkörper 31 als auch den Gefäßaufsatz 10 umklebt und deren Relativposition zueinander dauerhaft sichert; jedenfalls bis zum Erstgebrauch oder bis zur Erstöffnung des mit dem Kennzeichnungssatz 1 bestückten Gefäßes 30.

Das Hauptelement des dreidimensionalen Formteils 100 bzw. des Gefäßaufsatz 10 in Figur 3 ist eine (vorzugsweise durchgängig um eine axiale Richtung z des Gefäßaufsatzes 10 umlaufende) Umfangswandung 12, die auch bei Betrachtung des damit verbundenen Gefäßes, etwa von der Seite her, als erstes auffällt. Die radial nach außen weisende Umfangsfläche 10a dieser Umfangswandung 12 ist vorzugsweise, aber nicht zwangsläufig auf ein oberes Ende des Gefäßkörpers 31 bzw. Gefäßbauches 30b aufsetzbar oder aufstützbar; diese Umfangsfläche 10a der Umfangswandung 12 dient dazu, die kennzeichenbare Umfangsfläche des Gefäßes zu vergrößern, insbesondere diese in Richtung z zu verlängern und so deren Höhenabmessung in Richtung z künstlich zu überhöhen. Hierbei kann sich die Umfangswandung 12 des Gefäßaufsatzes 10, auf das Gefäß 30 in der vordefinierten Relativposition aufgesetzt, sich durchaus noch weiter in Richtung z erstrecken als der Gefäßverschluss 32 selbst.

Der jeweilige Gefäßaufsatz 10 ist stets ein mehr oder weniger starres Formteil; insbesondere ein massives Formteil, d.h. ein solches, das nicht einfach durch Biegen, Knicken oder anderweitiges Umformen einer Folie, etwa einer Kunststofffolie herstellbar ist. Die massive Gestaltung der Gefäßaufsatz 10 verhindert auch, dass durch versehentlichen Druck oder Stoß von oben auf den Gefäßaufsatz 10 (in Richtung des Gefäßes 30) der Gefäßaufsatz 10 sich am unteren Rand aufweiten und so über die Umfangsfläche 30a des Gefäßkörpers 31 geraten könnte; Folien als Material für den Gefäßaufsatz hingegen würden demgegenüber nur eine geringe Formstabilität und gegenüber plastischer Verformung infolge äußerer Krafteinwirkungen aufweisen.

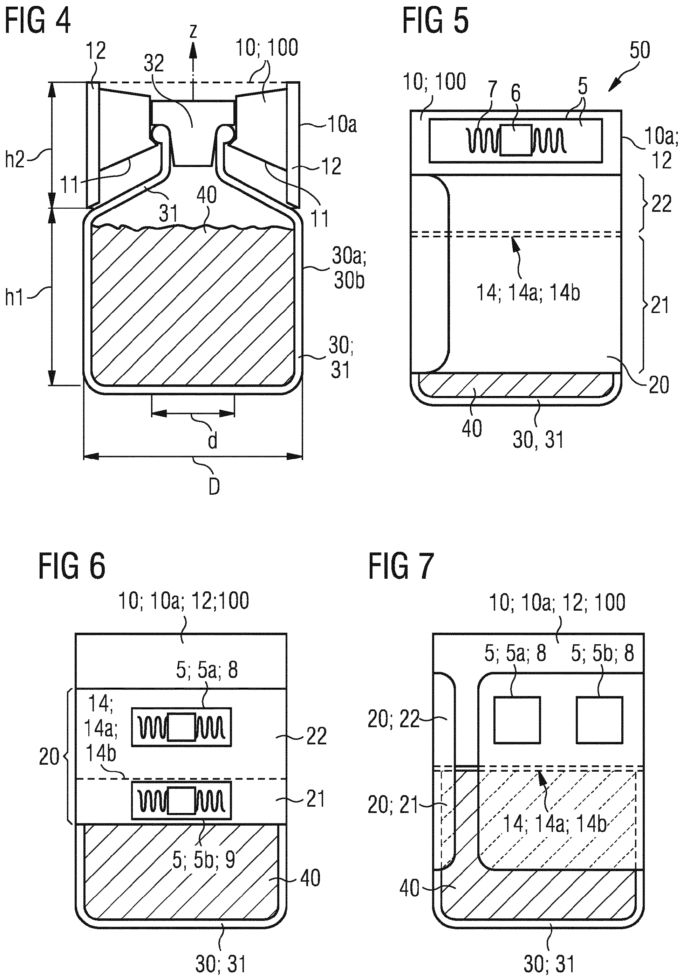

Die Figuren 4 und 5 zeigen den Gefäßaufsatz 10 des Kennzeichnungssatzes 1 aus Figur 3; nun montiert oder zumindest aufgesetzt auf das Gefäß 30 bzw. auf dessen Verschluss 32 und/oder auf dessen eigentlichem Gefäßkörper 31. Hierzu zeigt Figur 4 eine Querschnittsansicht des bereits mit einer pharmazeutischen Flüssigkeit 40 gefüllten Gefäßes 30 mit daran bzw. darauf montiertem oder zumindest positioniertem Gefäßaufsatz 10, wohingegen Figur 5 eine Seitenansicht des fertig konfektionierten Gefäßes 30 mit allen drei Einzelbestandteilen des Kennzeichnungssatzes 1, nämlich mit Gefäßaufsatz 10 bzw. dem Formteil 100, dem Etikett 20 und dem RFID-Transponder 5 zeigt, wodurch eine fertige, neuartige pharmazeutische Konfektionierungseinheit 50 entsteht. Figur 4 zeigt somit in der Querschnittsansicht nur den Gefäßaufsatz 10 auf dem Gefäß 30; noch ohne Darstellung von Etikett 20 und RFID-Transponder 5, die erst in Figur 5 mit dargestellt sind.

Der gemäß dieser Anmeldung vorgeschlagene Gefäßaufsatz 10, etwa in Form des dreidimensionalen Formteils 100 in Figur 3 (hier erläutert für das exemplarische Gefäß aus Figur 1) löst das Platzproblem; mithilfe dieses Gefäßaufsatzes 10 wird eine künstliche Vergrößerung der kennzeichenbaren Fläche, insbesondere eine Verlängerung dieser Fläche in axialer Richtung z erreicht. Hierzu wird der Gefäßaufsatz 10 am verschlussseitigen Ende des Gefäßes 30 auf das Gefäß 30 aufgesetzt, aufgedrückt, aufgeklemmt, aufgesteckt, aufgeschraubt oder in sonstiger Weise montiert oder zumindest angesetzt, angelegt oder in sonstiger Weise lediglich in vordefinierter Relativposition zum Gefäß (vor-)positioniert. Unabhängig davon, auf welche Weise der Gefäßaufsatz 10 am Gefäß 30, am Gefäßkörper 31 und/oder an dessen Verschluss 32 montiert oder positioniert wird, entsteht eine geeignete, durch die Kontur des Gefäßaufsatzes 10 vordefinierte Relativposition des Gefäßaufsatzes 10 relativ zum Gefäß. Diese Relativposition ist aus Figur 4 ersichtlich, in der Gefäß 30 und aufgesetztes Formteil 100 bzw. Gefäßaufsatz 10 in Querschnittsansicht dargestellt sind.

Da es sich bei pharmazeutischen Gefäßen 30 in aller Regel um genormte Gefäße handelt, die beispielsweise europäisch oder international genormten Maßen unterliegen, sind die Abmessungen solcher Gefäße im Vorhinein bekannt. Das als Gefäßaufsatz 10 bestimmte Spritzguss- oder sonstige Formteil 100 kann daher so geformt sein, dass es formschlüssig, bündig oder in sonstwie geeigneter Weise mit Oberflächenbereichen des Gefäßes 30 ineinandergreift. Beispielsweise sind in Figur 3 und 4 exemplarisch unten innenseitig an einer Innenkontur 11 des Gefäßaufsatzes 10 vorhandene, nach innen weisenden Vorsprünge angedeutet, etwa in Form von Dornen oder sonstigen Vorsprüngen, die zum Untergreifen des Gefäßverschlusses 32 und/oder eines die Gefäßöffnung umgebenden Wulstes oder sonstigen äußeren Vorsprungs des Gefäßkörpers 31 dienen. Solche oder andere Vorsprünge können, ebenso wie die Innenkontur 11 insgesamt, wahlweise in bestimmten azimutalen Abschnitten außerhalb des Umfangs des Gefäßes an dessen verschlussseitigen Bereich heranführen oder alternativ entlang des vollständigen Umfangs azimutal umlaufend vorgesehen sein. Eine Umfangswandung 12 und/oder eine äußere Umfangsfläche 10a des Gefäßaufsatzes 10 hingegen laufen in azimutaler Richtung vorzugsweise vollständig um den (kleineren) Umfang des Gefäßverschlusses 31 und/oder eines Gefäßhalses herum und bewirken letztlich eine Aufweitung des Radius bzw. Durchmessers d des Gefäßverschlusses 31 (und/oder des Gefäßes 30 in Höhe des Gefäßverschlusses 32) bis hin zu demjenigen Radius bzw. Durchmessers D, den in Höhe h1 unterhalb des Gefäßverschlusses 32 der Gefäßbauch 30b oder der sonstige Abschnitt des eigentlichen Gefäßkörpers 31 besitzt. Der Gefäßaufsatz 10 überwindet in Höhe des Verschlusses 31 die herkömmlich einer Etikettierung oder sonstigen Kennzeichnung dort im Wege stehende radiale Stufe zwischen Gefäßverschluss 32 und Gefäßkörper 31 und ermöglicht es, ein Etikett und/oder einen beliebigen Transponder (insbesondere einen RFID-Transponder 5) nunmehr auf die vergrößerte, gemeinsame Außenfläche 30a, 10a von Gefäß 30 und Gefäßaufsatz 10 aufzubringen.

Die in Richtung z weisende Oberseite des Gefäßaufsatzes 10 kann geschlossen oder ebenso auch offen oder teilweise offen, beispielsweise mit Löchern oder sonstigen Öffnungen oder Aussparungen versehen sein. Insofern stellt der Gefäßaufsatz 10 bzw. das als Gefäßaufsatz 10 bereitgestellte (Kunststoff)-Formteil nicht zwangsläufig eine (sekundäre bzw. zusätzliche) Kappe dar, sondern kann auch ein bloßer umfangsseitiger Flächenfortsatz sein, wohingegen im Bereich der Kopf- oder Stirnseite des so konfektionierten Gefäßes eine Kennzeichnung nicht notwendigerweise erleichtert oder womöglich (je nach Geometrie) sogar erschwert wird, was jedoch durch den enormen Gewinn an Umfangsfläche mehr als kompensiert wird.

Ein weiterer Unterschied des hier vorgestellten Gefäßaufsatzes 10 gegenüber einer bloß zusätzlich aufgesetzten Kappe, oder gegenüber einer beliebigen Hülse besteht darin, dass der vorgeschlagene Gefäßaufsatz 10 den Gefäßkörper 31 oder jedenfalls dessen Gefäßbauch 30b (oder den sonstigen, das flüssig befüllbare Gefäßvolumen in azimutaler Umfangsrichtung umgreifenden Wandungsabschnitt 30a) gerade nicht umgreift. Stattdessen besitzt die radial nach außen weisende Umfangsfläche 10a lediglich denselben Durchmesser D wie die nach außen weisende Umfangsfläche 30a des Gefäßkörpers 31 und endet daher mit ihrem unteren Rand in Höhe des oberen Randes der (gemäß dem Außendurchmesser D gestalteten) Umfangsfläche 30a oder bis zu wenigen Millimetern oberhalb davon. Im Gegensatz zu einer herkömmlichen (Sekundär-)Kappe wird der hier vorgestellte Gefäßaufsatz 10 bzw. dessen azimutal umlaufende Umfangswandung 12 also nicht über den Gefäßkörper 31 oder jedenfalls nicht über dessen Gefäßbauch 30b oder sonstigen äußeren Wandungsabschnitt 30a übergestülpt, sondern wird lediglich (falls er überhaupt mit dem Gefäßbauch 30b in Berührung kommt) auf oder oberhalb des Gefäßbauches 30b bzw. sonstigen äußeren Wandungsabschnitts 30a abgesetzt oder aufgesetzt, ohne dort einen größeren Radius, Durchmesser oder sonstigen Umfang zu erreichen als der Gefäßbauch 30b oder sonstige äußere Wandungsabschnitt 30a. Diese Konstruktion ermöglicht eine faltenfreie Kennzeichnung durch ein Etikett 20 und/oder einen RFID-Transponders 5, die einfacher als bei zum Überstülpen bestimmten Aufsatzkapseln oder Verschlusskappen noch größeren Durchmessers möglich ist. Somit wird die etikettierbare und/oder elektronisch kennzeichenbare Beschriftungsfläche des Gefäßkörpers 31 und/oder des Gefäßbauches 30b durch den Gefäßaufsatz 10 nicht überdeckt, sondern verschlussseitig bzw. in axialer Richtung z noch überhöht bzw. fortsetzt, ohne dass in axialer und/oder ragialer Richtung eine störende Überlappung des Gefäßaufsatzes 10 mit dem Gefäßbauch 30b entsteht.

Ansonsten kann der Gefäßaufsatz 10, dessen Innenkontur 11 und/oder wahlweise ein Formelement oder sonstiger Formteilabschnitt hiervon als Gegenstück oder Negativform zu einem Gefäßhals des Gefäßes 30 und/oder zum Gefäßverschluss 32 (oder auf sonstige Weise formschlüssig hiermit ineinandergreifend) ausgeformt sein. Dadurch ist der Gefäßaufsatz 10 in einer vordefinierten Relativposition an einem bestimmungsgemäß zu kennzeichnenden, genormten pharmazeutischen Gefäß 30 anbringbar, an- oder aufsetzbar, anlegbar oder in sonstiger Weise positionierbar etc.

In axialer Richtung z hingegen erstreckt sich die Umfangswandung 12 des Gefäßaufsatzes 10 bzw. deren Außenfläche 10a, wenn der Gefäßaufsatz 10 in der vordefinierten Relativposition am Gefäß 30 montiert und/oder positioniert ist, bis zu einen größerem (u.a. axialen) Abstand von der Flüssigkeit 40 als die Wandungsabschnitte des zu kennzeichnenden Gefäßkörpers 31 und/oder des Gefäßverschlusses 32, insbesondere auch weiter in Richtung z als diejenigen Wandungsabschnitte von Gefäßkörper 31 und Gefäßverschluss 32, die im gefüllten Zustand des Gefäßes 30 normalerweise bis an die pharmazeutische Flüssigkeit heranreichen (etwa bei Lagerung in aufrecht stehender Position des Gefäßes) oder die (je nach Orientierung des Gefäßes beim Transport oder beim Gebrauch) zumindest zeitweise an die pharmazeutische Flüssigkeit 40 heranreichen können.

Diese künstliche Überhöhung der Kennzeichnungsfläche, die sich nun aus zwei Teilflächen 30a und 10a von Gefäßkörper 31 und Gefäßaufsatz 10 zusammensetzt, stellt unverhofft eine kennzeichenbare Zusatzfläche am Gefäß 30 bereit; insbesondere eine kennzeichenbare Zusatzfläche im Bereich (etwa in der Höhe bzw. in der Nähe) des Gefäßverschlusses 32, wo herkömmlich keine ideale oder in jeder Hinsicht praktikable Möglichkeit zur effizienten Kennzeichnung ersichtlich ist.

Figur 5 zeigt eine schematische Seitenansicht der fertiggestellten Konfektionierungseinheit 50, die das Gefäß 30 und die daran befindlichen Bestandteile 5, 10, 20 des Kennzeichnungssatzes 1 umfasst. Der RFID-Transponder 5 kann beispielsweise vorzugsweise in Höhe des Gefäßaufsatzes 10 auf dessen Umfangsfläche 10a aufgeklebt, aufgelegt oder angeschmiegt sein (etwa mithilfe des Etiketts 20 selbst). Das Etikett hingegen wird vorzugsweise auf beide Umfangsflächen 30a und 10a, d.h. auf das Gefäß 30 und den Gefäßaufsatz 10 aufgeklebt. Insbesondere kann mithilfe des Etiketts 20 der Gefäßaufsatz 10 an dem Gefäß 30 angebracht bzw. fixiert werden.

Das Etikett 20 kann insbesondere einen ersten Etikettenabschnitt 21 zum Aufkleben und/oder Auflegen auf die Umfangsfläche 30a des Gefäßkörpers 31 und einen zweiten Etikettenabschnitt 22 zum Aufkleben und/oder Auflegen auf die Umfangsfläche 10a des Gefäßaufsatzes 10 aufweisen. Zwischen beiden Etikettenabschnitten 21, 22 kann ein Durchtrennungsbereich 14 angeordnet sein, der bestimmungsgemäß bei oder vor dem Öffnen des mit dem Kennzeichnungssatz 1 versehenen Gefäßes 30 bestimmungsgemäß beschädigt oder zerstört wird. Der Durchtrennungsbereich 14 kann, wie lediglich schematisch in Figur 5 dargestellt ist, eine oder mehrere Perforationen 14a, Anstanzungen oder sonstige Schwächungslinien, einen Aufreißstreifen 14b und/oder eine beliebige sonstige Schwächungsstruktur, etwa einen Folien- oder Filmbereich niedriger Einreißfestigkeit (ohne Bezugszeichen) aufweisen, die z.B. den gesamten Umfang des Gefäßes oder einen Großteil des Umfangs in azimutaler Richtung umläuft, und zwar in der Höhe zwischen beiden Höhenabschnitten h1 und h2..

In Figur 5 ist das Etikett 20 zwar intransparent dargestellt; vorzugsweise ist es jedoch transparent und gibt die Sicht frei auf die Medikamentenlösung oder sonstige pharmazeutische Flüssigkeit 40 im Gefäßvolumen des Gefäßes 30.

In Figur 5 ist oberhalb und außerhalb der Etikettenfläche 20 der RFID-Transponder 5 dargestellt und insbesondere auf der in Richtung z künstlich verlängerten Umfangsfläche 10a des Gefäßaufsatzes 10 aufgebracht. Jedoch kann der Transponder 5 ebenso in das Etikett 20 integriert oder auf der Unterseite des Etiketts angeordnet sein (d.h. in radialer Richtung zwischen dem Etikett 20 und der nach außen weisenden Umfangsfläche 30a und/oder 10a des Gefäßkörpers 31 und/oder Gefäßaufsatzes 10). Nach bestimmungsgemäß erstmaligem Öffnen bzw. Durchtrennen des Etiketts 20 (und/oder ggfs. auch des RFID-Transponders 5) ist der Gefäßaufsatz 10 gemeinsam mit dem Gefäßverschluss 32 von dem Gefäßkörper 31 trennbar; alternativ kann der Gefäßaufsatz 10 auch einzeln von dem Verschluss 32 bzw. vom Gefäß 30 insgesamt abtrennbar sein, bevor der Verschluss 32 geöffnet, d.h. vom Gefäßkörper 31 abgetrennt oder zumindest gelöst oder gelockert wird. Solange das Etikett 20 und/oder der RFID-Transponder 5 noch unbeschädigt sind, eignen sie sich dazu, den Gefäßaufsatz 10 an dem Gefäß 30 zu sichern oder aber als Erstöffnungsnachweis-Elemente eine zumindest einmalige Öffnung oder sonstige Manipulation am konfektionierten Gefäß 50 anzuzeigen.

Hinsichtlich des Transponders 5, der z.B. zur elektronischen Kennzeichnung des Gefäßes 30, seines Inhalts 40 und/oder zur Speicherung sonstiger die Medikamentenflüssigkeit, deren Verwendung und/oder sonstige medizinisch-anwendungsbezogene Umstände betreffender Daten dienen kann, kommen insbesondere die nachfolgenden Ausführungsbeispiele in Betracht:
Hinsichtlich der Positionierung des RFID-Transponders 5 ist beispielsweise vorgesehen, diesen auf die Umfangsfläche 10a des Gefäßaufsatzes 10 und/oder auf die Umfangsfläche 30a des Gefäßes 30 aufzukleben, aufzulegen oder anderweitig aufzubringen. Beispielsweise kann der Transponder 5 auf die Etikettenrückseite aufgeklebt sein und gemeinsam mit dem Etikett 20 auf die vergrößerte Umfangsfläche 30a, 10a aufgeklebt bzw. aufgespendet werden. Vorzugsweise erfolgt die Aufklebung oder anderweitige Aufbringung des RFID-Transponders 5 im Bereich ausschließlich der Umfangsfläche 10a des Gefäßaufsatzes 10, wodurch der Transponder keine Flächenbereiche der eigentlichen Gefäßwandung 30a, insbesondere nicht solche des Gefäßbauches 30b überdeckt, wo die freie Sicht auf die Medimentenflüssigkeit (etwa zur Beurteilung ihrer Menge oder ihres Zustands etc.) beeinträchtigt werden könnte.

Der RFID-Transponder 5 kann insbesondere ein UHF-RFID-Transponder 5 sein, etwa für eine oder mehrere normierte Kommunikations-Frequenzen im Bereich zwischen 860 und 960 MHz. Diese Ausführungsform hat den Vorteil, dass der UHF-RFID-Transponder 5 über größere Reichweiten von bis zu 3, womöglich bis zu 10 Metern erfassbar bzw. auslesbar ist, wohingegen herkömmliche HF-RFID-Transponder bzw. NFC-RFID-Transponder (Near Field Communication) lediglich über wenige Zentimeter auslesbar sind; etwa durch Smartphones oder spezielle Lesegeräte. Bei Verwendung von UHF-RFID-Transpondern hingegen könnten künftig alle Transponder in einem bestimmten Gebäudeabschnitt, Schrank oder sonstigen Aufbewahrungsbereich gleichzeitig erfasst werden; eine aufwendige Einzelerfassung würde sich künftig erübrigen.

Die Figuren 6 und 7 zeigen zwei weitere Ausführungsbeispiele hinsichtlich der Anzahl und Ausgestaltung von Transpondern für den Kennzeichnungssatz 1 bzw. das damit gekennzeichnete Gefäß 30. Beide Figuren 6 und 7 zeigen kombiniert miteinander mehrere Merkmalsoptionen, die jedoch auch einzeln statt in dieser Weise kombiniert miteinander realisierbar sind. Beide Figuren 6 und 7 zeigen eine jeweils fertige Konfektionierungseinheit 50 in einer Seitenansicht, die derjenigen in Figur 5 entspricht.

So kann der Kennzeichnungssatz 1 einen ersten RFID-Transponder 5a und einen zweiten RFID-Transponder 5b umfassen, wobei zumindest der erste RFID-Transponder 5a ein UHF-RFID-Transponder 8 ist, der zum Aufkleben und/oder Positionieren in einem in axialer Richtung z zum Gefäßinhalt 40 versetzten Höhenabschnitt h2 bestimmt ist, d.h. dort, wo die Umfangswandung 12 bzw. Umfangsfläche 10a des Gefäßaufsatzes 10 diesen UHF-RFID-Transponder 5; 5a; 8 in größerem Abstand vom Gefäßinhalt 40 trägt oder stützt.

Der zweite RFID-Transponder 5b hingegen kann ein herkömmlicher NFC- bzw. HF-RFID-Transponder 9 sein; wahlweise zur Positionierung an der Gefäßwandung 30a oder zur zur Positionierung ebenfalls an der höhergelegenen Gefäßaufsatzwandung 10a.

Für die Verwendung von UHF-RFID-Transpondern 5; 8 bietet eine Positionierung an der höhergelegenen Gefäßaufsatzfläche 10a den Vorteil, dass nachteilige Einflüsse der Medikamentenflüssigkeit 40 auf die Performance, insbesondere Auslesbarkeit (insbesondere durch Absorption elektromagnetischer Strahlung bei Kommunikation mit dem Transponder) infolge des größeren Abstands vom Gefäßinhalt 40 deutlich verringert werden; UHF-Transponder 8 und deren Erfassung sind in dieser Transponder-Position, nämlich bei Anbringung auf der Umfangsfläche 10a, oder jedenfalls (von außen oder auch innen) an der Umfangswandung 12 des Gefäßaufsatzes 10, zuverlässiger auslesbar und/oder erfassbar.

Wie jeder RFID-Transponder 5 hat auch ein solcher UHF-RFID-Transponder 8 sowohl einen Transponder-Chip 6 als auch eine Transponder-Antenne 7 (s. Figur 5).

Hinsichtlich der variabel gestaltbaren zusätzlichen Einzelmerkmale ist zum einen das Etikett 20 gemäß Figur 6 intransparent, gemäß Figur 7 hingegen transparent. In beiden Figuren umfasst und/oder überdeckt die Lage bzw. Höhenposition des Etiketts 20 und/oder des mindestens einen Transponders 5 entlang der Richtung z (s. weiter oben) den Übergang zwischen h1 und h2, d.h. die axiale Position zwischen der ringförmigen Berührungsfläche der oberen Rundung des Gefäßbauches 30b und der darauf aufliegenden (oder ca. bis zu einen Millimeter darüber in Position gehaltenen) Unterkante der Umfangswandung 12 des Gefäßaufsatzes 10. In (ungefähr oder exakt) gleicher Höhe befindet sich auch der Durchtrennungsbereich 14 (des Etiketts 20 und/oder des Transponders 5), entlang dessen zumindest das Etikett 20 in seinen ersten, unteren Etikettenabschnitt 21 und seinen zweiten, oberen Etikettenabschnitt 22 zerteilbar ist. Der Durchtrennungsbereich 14 kann eine Perforation 14a, Anstanzung oder sonstige Schwächungslinie oder eine Mehrzahl von ihnen sein oder umfassen; etwa in Form eines Aufreißstreifens 14b (mit oder ohne Greiflasche) oder alternativ eine beliebige sonstige Schwächungsstruktur, etwa einen Folien- oder Filmbereich niedriger Einreißfestigkeit (nicht dargestellt). Der azimutal vorzugsweise umlaufende Durchtrennungsbereich 14 des Etiketts 20 kann durch eine Bedruckung farblich oder schwarz markiert sein (etwa als Sollrisslinie kenntlich gemacht); diese und andere, lediglich durch Bedruckung der Etikettenoberfläche, Transponderoberfläche und/oder Aufsatzoberfläche zu realisierenden Einzelheiten sind in den Figuren dieser Anmeldung der Übersichtlichkeit halber nicht eigens dargestellt.

Weiterhin ist die Höhenerstreckung des Etiketts 20 bzw. des ersten Etikettenabschnitts 21 und zweiten Etikettenabschnitts 22 in den Figuren 6 und 7 (unterschiedlich) variiert.

Beiden Figuren ist gemeinsam, dass sie jeweils zwei Transponder, insbesondere RFID-Transponder 5, nämlich 5a und 5b aufweisen (in Figur 7 lediglich schematisch dargestellt). Soweit in dieser Anmeldung Leiterbahnverläufe von Transponder-Antennen 7 eingezeichnet sind, ist diese Darstellung schematisch vereinfacht und daher ohne Einschränkung hinsichtlich Art, Antennenform, Antennenverlauf, Frequenzbereich oder hinsichtlich irgendeiner sonstigen Beschaffenheit des jeweiligen Transponders zu verstehen. Gleiches gilt für die Positionierung, Größe des Transponder-Chips 6 und dessen Anbindung an die Transponder-Antenne 7.

Ein weiterer Unterschied zwischen den Ausführungsformen der Figuren 6 und 7 besteht darin, dass in Figur 7 beide RFID-Transponder 5a und 5b im Flächenbereich des zweiten Etikettenabschnitts 22 angeordnet sind, der zum Aufkleben (oder zumindest Auflegen, Aufdrücken oder anderweitigen Auflegen oder Positionieren) auf die Umfangsfläche 10a des Gefäßaufsatzes 10 bestimmt ist. In Figur 6 befindet sich der zweite 5b der beiden RFID-Transponder hingegen im Flächenbereich des ersten Etikettenabschnitts 21, der zum Aufkleben (oder zumindest Auflegen, Aufdrücken oder anderweitigen Auflegen oder Positionieren) auf die Umfangsfläche 30a des Gefäßes 30 bestimmt ist.

Bei allen Ausführungsbeispielen, bei denen der Flächenbereich eines beliebigen Transponders 5 mit einem Flächenbereich (z.B. 21; 22) eines Etiketts überlappt, kann insbesondere vorgesehen sein, dass der Transponder auf der Rückseite des Etiketts aufgeklebt oder aufgelegt bzw. angeordnet ist. Etiketten und Transponder sind vorzugsweise auf die jeweilige Außenfläche 30a und/oder 10a des Gefäßes 30 und/oder des Gefäßaufsatzes 10 aufgelegt und/oder aufgeklebt. Beispielsweise ist die Etikettenrückseite klebend und haftet bereichsweise auf dem Transponder 5; außerhalb davon hingegen auf die etikettierte Außenfläche 30a und/oder 10a aufgeklebt. Die Etiketten 20 sind vorzugsweise Folienetiketten, insbesondere einlagige Folienetiketten.

Im Ausführungsbeispiel gemäß Figur 6 kann wie erwähnt z.B. der erste RFID-Transponder 5a insbesondere ein UHF-RFID-Transponder 8 sein, wohingegen der zweite, in Höhe des Gefäßes 30 bzw. Gefäßbauches 30b platzierte RFID-Transponder 5b wahlweise ein HF-RFID-Transponder 9 (für NFC-Kommunikation; wie dargestellt) oder ein weiterer UHF-RFID-Transponder ist.

Im letzteren Fall kann dieser zweite UBT-RFID-Transponder 5b auch auf der Gefäßoberfläche 30a positioniert sein (sei es verdeckt durch ein weiter nach unten reichendes Etikett 20 bzw. dessen unteren Abschnitt 21, oder auch freiliegend ohne Etikettenabdeckung auf das Gefäß 30 aufgeklebt). Eine solche Platzierung auf dem Gefäßbauch 30b, insbesondere nahe des Gefäßbodens (statt wie in Figur 6 dargestellt in der Nähe des ursprünglichen, oberen Füllstands) eignet sich beispielsweise zur Füllstandskontrolle. Falls also dieser zweite RFID-Transponder 5b (der dann allerdings in Figur 6 mit dem Bezugszeichen 8; statt wie dargestellt mit "9" zu bezeichnen wäre) ein (weiterer) UHF-RFID-Transponder ist, könnte seine Positionierung absichtlich unterhalb der Füllhöhe bzw. des Flüssigkeitsspiegels der Medikamentenflüssigkeit 40 (vgl. Figur 1) gewählt werden, um eine Kommunikation mit diesem UHF-RFID-Transponder 5b nur dann zu ermöglichen, wenn das Gefäß 30 leer und somit die pharmazeutische Flüssigkeit 40 (fast) aufgebraucht ist. Solange in Höhe des Gefäßbodens bzw. in Höhe des zweiten UHF-RFID-Transponders 5b noch genügend Flüssigkeit im Behälter 30 enthalten ist, absorbiert sie die UHF-Kommunikationssignale des UHF-RFID-Transponders 5b oder schwächt deren Intensität jedenfalls spürbar; der Transponder 5b wird dann nicht erfasst. Dies gilt bei ausreichend hohem Füllstand; sowohl für den noch ungeöffneten Behälter 30 als auch für einen bereits erstmals oder mehrmals geöffneten Behälter 30, solange noch nicht genügend Volumen an Flüssigkeit 40 entnommen oder anderweitig verbraucht worden ist. Erst wenn der Flüssigkeitspegel bis auf die Höhe des Transponders 5b oder dicht darunter abgesunken ist (jeweils bei aufrechter Behälterposition wie in Figur 6 dargestellt), liefert der Transponder 5b ungestört Signale und zeigt dadurch an, dass der Behälter 30 leer oder fast leer ist.

Im ungeöffneten Zustand des mit dem Kennzeichnungssatz 1 gekennzeichneten, d.h. durch Etikett 20 und/oder Transponder 5 versiegelten Gefäßes 30 liefert nur der erste Transponder 5a - wahlweise ein UHF-RFID-Transponder 8 wie dargestellt, oder alternativ ein HF-RFID-Transponder (nicht dargestellt) - ein Signal; selbst wenn dieser erste Transponder 5a ein UHF-RFID-Transponder 8 ist, wird die Kommunikation hiermit nicht gestört, da er sich in Höhe des Gefäßaufsatzes 10 befindet, d.h. in jedem Fall oberhalb des Flüssigkeitspegels und somit beabstandet zur Flüssigkeit. Da die Umfangswandung 12 und deren außenseitige Umfangsfläche 10a in jedem Fall in axialer Richtung z (welche in dieser Anmeldung stets die axiale Richtung z des Gefäßaufsatzes 10 und, sobald dieser am Gefäß 30 montiert oder positioniert ist, zugleich auch die axiale Richtung des Gefäßes 30 bezeichnet, welches nicht zwangsläufig auch der lotrechten bzw. senkrechten Richtung entgegen der Erdanziehungskraft entspricht) von dem Innenvolumen beabstandet ist, welches mehr oder weniger mit Flüssigkeit 40 befüllbar ist, entsteht in jedem Fall ein Abstand bzw. eine Beabstandung dieses und jedes anderen, auf den zweiten Etikettenabschnitt 22 aufgeklebten oder sonstwie aufgebrachten Abschnitts des Transponders (hier: 5a) und/oder des damit versehen Etiketts. Für einen (ersten) UHF-RFID-Transponder 5a; 8 bedeutet dies, dass unabhängig von der Orientierung des Behälters (z.B. auch auf Kopf gestellt) die Flüssigkeit 40 in jedem Fall die Kommunition mit dem UHF-RFID-Transponder 5a; 8 nicht stören kann, da dieser nicht an einer Wandung des befüllbaren Innenvolumens des Gefäßes 30, sondern an einer davon abstehenden, davon getrennten oder sonstigen Wandung des dazu axial beabstandeten Gefäßaufsatzes 10 anliegt.

Im ursprünglichen Neuzustand des gekennzeichneten Gefäßes 30; 50 würde das noch erfassbare Kommunikationssignal dieses UHF-RFID-Transponder 5a; 8 (sofern in Höhe des Gefäßaufsatz 10 positioniert) zunächst diesen ungeöffneten, unmanipulierten und autorisierten Neuzustand des gekennzeichneten Gefäßes 30 bzw. 50 anzeigen (durch entsprechende Messung, d.h. elektronische Anregung und Auslesung über Funk). Sofern ein solcher Transponder zusätzlich eine (weitere) Antenne, Leiterschleife oder sonstige Leiterstrecke aufweist, die bei erstmaligem Öffnen des konfektionierten Gefäßes 30 bzw. 50 bestimmungsgemäß zwangsläufig zerstört oder unterbrochen wird (etwa durch Auf- oder Abreißen in Höhe des Durchtrennungsbereichs; s. weiter unten), zeigt das Ausbleiben des Antwortsignals dieses Transponders 5a an, das das Gefäß nicht mehr im Originalzustand ist, d.h. entweder zur erstmaligen Verabreichung oder Entleerung autorisiert geöffnet oder auch unautorisiert manipuliert) wurde. Erst wenn das Gefäß weitgehend geleert ist, ist wieder ein Signal messbar; allerdings stammt dieses von dem zweiten, unteren UHF-RFID-Transponder 5b; 8 (Abwandlung gegenüber Figur 6), der anzeigt, dass nicht mehr genügend Flüssigkeit enthalten ist, um die Kommunikation mit diesem UHF-RFID-Transponder 5b; 8 durch Absorption zu stören bzw. zu unterbinden.

Ansonsten jedoch kann wie in Figur 6 dargestellt - unabhängig vom Füllstand - der zweite, untere RFID-Transponder 5b auch ein HF-RFID-Transponder 9 sein, der etwa zum Auslesen mittels Smartphone oder Lesegerät bestimmt ist.

Auch grundsätzlich kann, wann immer bei einer beliebigen Ausführungsform dieser Anmeldung nur ein einziger Transponder (oder einer unter mehreren) vorgesehen ist, dieser wahlweise ein HF-RFID-Transponder oder ein (möglicherweise eher störanfälliger, aber dafür für größere Reichweiten geeigneter) UHF-RFID-Transponder sein.

In Figur 7 können beide jeweiligen Transponder 5a, 5b jeweils wahlweise UHF-RFID-Transponder 8 (wie dargestellt) oder HF-RFID-Transponder sein.

Ein weiteres Merkmal bezogen auf die Figuren 6 und 7, welches ebenso wie die obigen Merkmale auch einzeln variierbar ist (statt in Kombination mit den übrigen gezeigten Merkmalen dieser Figuren), besteht darin, dass gemäß Figur 6 das Etikett 20 ein Überrundumetikett ist, welches das Gefäß 30 und den Gefäßaufsatz 10 vollständig umrundet; der Blick auf den Durchtrennungsbereich 14 zeigt jedoch an, bis zu welcher Höhe der Bauch des Gefäßes 30 reicht. In Figur 7 hingegen umrundet das Etikett 20 den Umfang von Gefäß 30 und Gefäßaufsatz 10 zwar weitgehend, aber nicht vollständig.

Selbstverständlich kommen auch Etiketten in Betracht, die sehr viel kleinere Abschnitte des Umfangs von Gefäß 30 und/oder Gefäßaufsatz 10 bedecken. Beispielsweise kann selbst dann, wenn die Beschriftungsfläche am Gefäß 30 selbst eigentlich ausreichend groß ist, die hier vorgeschlagene Konfektionierungseinheit 50 mittels des Kennzeichnungssatzes 1 bereitgestellt werden, etwa um einen UHF-RFID-Transponder in größerem Abstand vom Gefäßinhalt 40 und damit unbeeinflusst von Störungen durch den Gefäßinhalt betreiben zu können; dies ist bei UHF-Transpondern direkt auf der Gefäßwand, auf deren Rück- oder Innenseite Wasser oder eine sonstige, meist wasserhaltige Flüssigkeit eingeschlossen ist, oft nicht zuverlässig möglich.

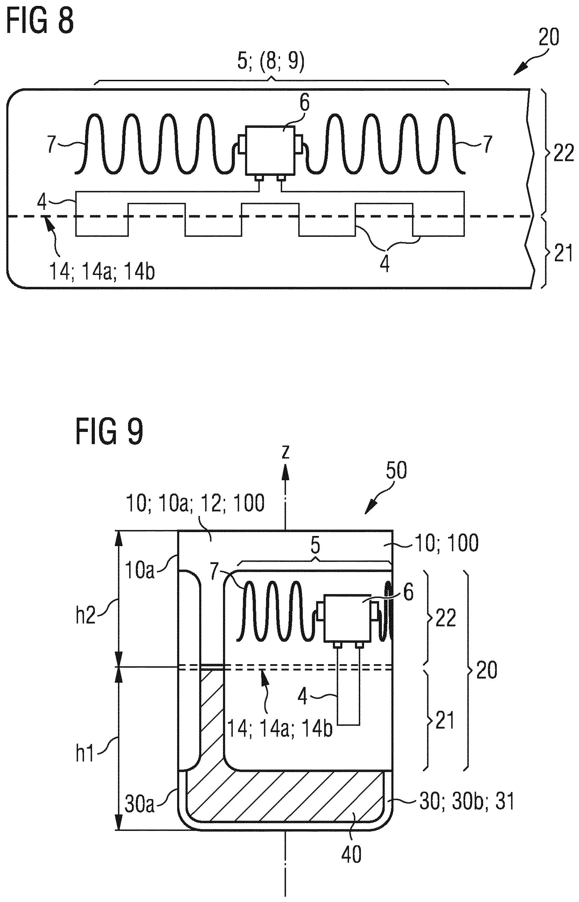

Figur 8 zeigt exemplarisch einen RFID-Transponder 5, der zusätzlich eine Messleitung 4, nämlich eine Durchtrennungs-Indikatorleitung 4 aufweist, die zusätzlich zur RFID-Antenne 7 vorgesehen und an den RFID-Chip 6 angeschlossen ist (z.B. über weitere Chip- bzw. Bond-Kontakte wie angedeutet). Der Chip kann durch elektrische Messung (etwa des elektrischen Widerstands bzw. Leitwerts dieser Messleitung 4 oder durch kapazitive Messung) prüfen bzw. feststellen, ob die Durchtrennungs-Messleitung 4 unterbrochen ist oder nicht.

Im Ausführungsbeispiel der Figur 8 ist dieser RFID-Transponder 5 mit einem Etikett 20 verbunden, welches zum Aufkleben auf oder jedenfalls Anbringen an der Umfangsfläche 30b des pharmazeutischen Gefäßes 30 als auch derjenigen Umfangsfläche 10b des Gefäßaufsatzes 10 bestimmt ist; wiederum mittels des ersten Etikettenabschnitts 21 bzw. des zweiten Etikettenabschnitts 22. Zwischen ihnen verläuft der Durchtrennungsbereich 14, der wie weiter oben erläutert in Form einer oder mehrerer Perforationen (vorzugsweise mit einem Aufreißstreifen zwischen zwei von ihnen), Stanzlinien oder sonstigen Schwächungslinien oder in Form eines Bereichs herabgesetzter Reißfestigkeit ausgebildet sein kann.

Die Durchtrennungs-Messleitung 4 ist so geführt, dass sie den Durchtrennungsbereich 14 (näherungsweise eine schmale Linie oder ein schmaler Streifen zwischen beiden Etikettenabschnitten 21, 22) einmal, zweimal oder auch öfter (wie dargestellt) überquert. Beim Aufreißen des Durchtrennungsbereichs 14, d.h. beim Abtrennen beider Etikettenabschnitte 21, 22 voneinander wird die Durchtrennungs-Messleitung 4 zerstört oder zumindest unterbrochen; diese Unterbrechung ist elektrisch messbar und über den RFID-Transponder 5 bzw. desse Chip 6 auslesbar. Die elektrische Auslesung des Zustands der Messleitung 4 zeigt somit an, ob das mit dem Kennzeichnungssatz 1 ausgestattete Gefäß 30, d.h. die fertiggestellte Konfektionierungseinheit 50 schon einmal geöffnet und/oder bei einem Öffnungsversuch manipuliert oder beschädigt worden ist.

Selbstverständlich ist hierfür erforderlich, Transponder 5 und Etikett 20 gemäß Figur 8 zunächst an dem Gefäß 30 und dem Gefäßaufsatz 10 anzubringen, wie in Figur 9 (und ähnlich bereits einigen vorherigen Figuren) dargestellt. Figur 9 zeigt den einfacheren Fall, dass die Messleitung 4 nur zwei Überquerungspunkte, an denen sie den Durchtrennungsbereich 14 überquert, aufweist. Die Ausgestaltung der Messleitung 4 gemäß Figur 8 eignet sich hingegen, um über einen größeren azimutalen Umfangsabschnitt von Gefäß 30 und Gefäßaufsatz 10 die (lokale) Unversehrtheit des als Sollrißlinie oder Sollbruchstelle gestalteten Durchtrennungsbereichs 14 zu überprüfen. Der Durchtrennungsbereich 14 liegt zweckmäßigerweise stets genau oder zumindest ungefähr in Höhe des Übergangs bzw. der Berührungsfläche zwischen (äußerem) Gefäßumfang, d.h. dem oberen Rand der Umfangsfläche 30a des Gefäßes 30, und dem unteren Rand der Umfangswandung 12 bzw. der Umfangsfläche 10a des Gefäßaufsatzes 10, d.h. am Übergang zwischen den Höhenabschnitten h1 und h2.

Die Messleitung 4 in den Figuren 8 und 9 kann statt als geschlossene Leiterschleife auch als offene Messleitung oder Leiterstrecke, z.B. als weitere Antenne beliebigen Verlaufs ausgebildet sein; etwa für eine weitere Messfrequenz. Ferner kann auch die Antenne 7 dieser oder der übrigen Figuren oder sonstigen Ausführungsbeispiele gleichzeitig auch als Messleitung 4 dienen; in diesem Fall entfällt die zusätzliche Messleitung 4.

Alle bis hierhin beschriebenen Merkmale können einzeln als auch in Kombination miteinander mit jeder Ausführungsform der übrigen Figuren, Beschreibungsbestandteile und Patentansprüche kombiniert werden; die Auswahl der oben gewählten Merkmalskombinationen ist insoweit lediglich exemplarisch.

Die Verwendung des hier vorgeschlagenen Gefäßaufsatzes 10 erhöht die Auslesbarkeit von RFID-Tags auf flüssigkeitsgefüllten Primärcontainern (wie etwa Vials, Karpulen, Spritzen, Ampullen etc.); insbesondere UHF-RFID-Tags, deren Perfomance und/oder Lesbarkeit in direkter Nähe zu bestimmten Flüssigkeiten 40 häufig beeinträchtigt ist, sind aufgrund des vergrößerten Abstands zur Flüssigkeit 40, der durch den Gefäßaufsatz 10 erreicht wird, zuverlässig auslesbar. Bei transparenten pharmazeutischen Primärcontainern wie Spritzen, Vials wird die freie Sicht auf den Gefäßinhalt zudem durch den RFID-Tag bzw. RFID-Transponder, dessen Design häufig opake Strukturen umfasst, nicht mehr erschwert, da der Transponder nun abseits der Gefäßoberfläche, nämlich auf dem Gefäßaufsatz aufgebracht werden kann; die visuelle Begutachtung des Medikaments im Gefäß fällt somit leichter.

Das mit dem vorgeschlagenen Kennzeichnungssatz 1 versehene pharmazeutische Gefäß 30, d.h. die so gebildete pharmazeutische Konfektionierungseinheit 50 ist durch eine hochautomatisierte Herstellungsabfolge, die nur einige wenige zusätzliche Prozesschritte hinzufügt, effizient und preis- und kostengünstig herstellbar. Auch als Erstöffnungsnachweis dienende Produktbestandteile sind nicht nur problemlos in die Fertigung einfügbar, sondern auch die Option eines digital erfolgenden Erstöffnungsnachweises zur Erkennung manipulativer Eingriffe ("Tampering") ist leicht und ohne nachteiligen Zusatzaufwand bei der Herstellung realisierbar; insbesondere mithilfe der Messleitung 4.

Zudem wird die etikettierbare oder elektronisch kennzeichenbare Beschriftungsfläche spürbar erhöht, ohne dass es hierzu erforderlich wäre, am Etikett 20 abstehende Fahnen als bewegliche Beschriftungsteile anzubringen, die bei rotativen Druckprozessen im Weg stehen, beschädigt oder zerstört werden könnten oder die weitere Verarbeitung oder Herstellung nachteilig beeinflussen könnten. Ein auf den Gefäßaufsatz 10, beispielsweise auf dessen Umfangsfläche 10a oder auf sonstige Flächenbereiche der Umfangswandung 12 oder eines anderen Oberflächenabschnitts des Gefäßaufsatzes 10 angebrachtes bzw. positioniertes RFID-Tag (RFID-Transponder) bleibt dort zudem dauerhaft haften und unterliegt nicht der Gefahr, bei der weiteren Herstellung oder Konfektionierung oder beim Transport versehentlich beschädigt oder abgerissen zu werden.

Die durch den Gefäßaufsatz 10 erreichte Zusatzfläche zum Unterbringen von Etikett 20 und/oder Transponder 5 ermöglicht zudem, den Transponder in ausreichender und großzügig bemessener Größe (insbesondere seiner Antenne) zu dimensionieren, um eine zuverlässigere Kommunikation über Funk zu erreichen; anders als am einzelnen pharmazeutischen Gefäß selbst, das mit seiner eigenen Oberfläche als Beschriftungsfläche auskommen muss, besteht keine Notwendigkeit mehr, einen Transponder kleiner als eigentlich gewünscht zu dimensionieren. Ferner sind auch UHF-RFID-Tags mit standardmäßig verwendeten Bauformen bzw. Dimensionierungen verwendbar und erreichen zugleich wesentlich höhere Performance als im Falle der herkömmlich praktizierten Aufspendung direkt auf den Gefäßkörper 31.

Jeder beliebige pharmazeutische Primär-Container 30 kann daher mit einer geeignet geformten zusätzlichen Kapsel, Kappe, Aufsatzhülse oder sonstigen Bauform des Gefäßaufsatzes mit der zusätzlichen Beschriftungsfläche 10a; 12 versehen und in axialer Richtung überhöht werden, da der als Verlängerungsstück bzw. Fortsetzungstück dienende Gefäßaufsatz 10 stabil am Gefäßkörper 31 bzw. Gefäßbauch 30b anbringbar ist.

Eine stabile und sichere Montage des Gefäßaufsatzes 10 an dem Gefäß 30 selbst - sei es am Gefäßverschluss 32, am Gefäßkörper 31 (insbesondere am Gefäßhals dicht unterhalb des Verschlusses 32) oder an beiden - kann u.a. beispielsweise durch Formschluss, alternativ oder zusätzlich auch durch Verrastung (etwa mithilfe von Haken oder sonstigen geeigneten Vorsprüngen) erreicht werden. Der gemäß dieser Anmeldung vorgeschlagene Gefäßaufsatz 10 ist auch problemlos an handelsübliche Vial Flip-Off-Verschlüssen, Luer-Lock-Verschlüssen oder Needle-Shield-Aufsätzen etc. anbringbar.

Die mit der Gefäßumfangsfläche 30a bündige oder zumindest damit fluchtende zusätzliche Kennzeichungsfläche 10a setzt die eigentliche Gefäßumfangsfläche 30a fort bzw. verlängert diese, ohne dass zwischen ihnen größere Stufen oder Kanten entstünden, die eine sichere Handhabung erschweren oder gefährden würden. Die Aufsatzkappe, Aufsatzhülse oder der in sonstiger Weise geformte Gefäßaufsatz 10 schließt bündig mit dem Flaschenkörper 30; 31 ab, wodurch ein gleichmäßiger Rundkörper entsteht; Container 30 und Kappe 10 können mit standardmäßig angewandten automatisierten Etikettenverspende-Routinen, -Prozessen und -Anlagen einfach und störungsfrei, insbesondere frei von Falten und Stufen aufetikettiert werden. Im Bereich des z.B. kreisringförmigen Übergangs bzw. Zwischenraums zwischen Gefäßbauch 30b und Gefäßaufsatz 10 kann mit einem Öffnungsstreifen 14b oder einer Perforation 14a, Stanzung oder sonstigen Ausführungsform des Durchtrennungsbereichs 14 der Gefäßaufsatz 10 jederzeit wieder leicht und kraftsparend entfernt werden. Dies kommt auch einer optionalen Verwendung des Gefäßaufsatzes 30 als Erstöffnungsanzeige zugute.

Der Gefäßaufsatz 10 stellt ein sich an die kennzeichenbare Fläche 30a praktisch nahtlos anschließendes Verlängerungsstück dar; er ist leicht vom Gefäß 30 wieder abnehmbar. Aufgrund seiner stabilen Anbringung bzw. Befestigung in der vorgegebenen Relativposition an dem Gefäß sind der Handhabung sowie der automatisierten Applikation bzw. Aufspendung von Etikett 20 und/oder Transponder 5 auf das Gefäß 30 und auf den Gefäßaufsatz 10 keine Störungen der Prozessschritte zum Bedrucken und Aufspenden von Etiketten und/oder Transpondern zu befürchten.

Der RFID-Transponder 5 ist in einen Etikettenabschnitt bzw. Flächenbereich eines Etiketts 20 bzw. Labels integrierbar, welcher auf dem (als Kappe oder sonstiges Verlängerungsstück ausgebildeten) Gefäßaufsatz 10 platziert sowohl in radialer Richtung als auch in axialer Richtung z in einem großen Abstand zu dem im Gefäß 30 eingeschlossenen oder einschließbaren Flüssigkeitsvolumen 40 angeordnet ist.

Das Etikett 20 wird zweckmäßigerweise zugleich auch zur visuellen Kennzeichnung und Identifizierung des Gefäßes bzw. Behälters verwendet; der regulär vorgesehene Etikettierungsprozess des Gefäßes sowie das Fixieren oder Positionieren der Kappe 30 und auch die Bereitstellung eines als Erstöffnungsnachweis geeigneten Mittels sowie die Platzierung eines RFID-Transponders 5 (in gut auslesbarer Position und in der erforderlichen Transponder-Dimensionierung Größe) sind alle in einem Prozessschritt oder zumindest in einem Prozessablauf realisierbar. Im Übrigen wird mittels des Gefäßaufsatzes dem Fachmann ein praktikables Verfahren zum zuverlässigen Erstöffnungsnachweis mittels eines Transponders an die Hand gegeben. Eine vergleichbar gute, insbesondere platzgewinnende und störungsfreie Umsetzung einer "Tamper-Evidence"-Lösung mittels RFID-Transponder ist bislang nicht bekannt.

Der Gefäßaufsatz 10 überhöht absichtlich die Außenkontur am Umfang des Gefäßes; zum einen über die Höhe seines Gefäßbauches 30b hinaus; optional auch über die Höhe des Gefäßes 30 insgesamt hinaus; beispielsweise sogar über den Gefäßverschluss 32 hinaus. Beispielsweise kann die axiale Ausdehnung bzw. Abmessung des Gefäßaufsatzes 10 das Doppelte oder Dreifache der axialen Abmessung, also Höhenabmessung des Gefäßverschlusses 32 betragen. Ein vergleichbar deutliche Überhöhung der Höhe der Konfektionierungseinheit 50 bzw. der Kennzeichnungsfläche 30a, 10b über die Höhe des Einzelgefäßes 30 hinaus ist bislang bei einem herkömmlichen Gefäß nicht erreicht.

Der als axiales Verlängerungsstück bzw. axiale Fortsatz dienende Gefäßaufsatz 10 besitzt außen, d.h. in radialer Richtung denselben Radius bzw. Durchmesser D (und in Umfangsrichtung denselben Umfang) wie der Bauch 30b des Körpers 30; dieses außen bzw. ringsherum mit identischen lateralen Abmessungen versehene Verlängerungsstück 10; 100 reicht vorzugsweise dicht bis zum Übergang zwischen Gefäßhals und Kennzeichnungsfläche 30a (d.h. zwischen h1 und h2) heran.

Die als Sekundärverschluss dienende Aufsatzkappe 10 ist z.B. durch Formschluss, Verzahnung und/oder Verrastung mit dem Gefäßhals und/oder dem Gefäßverschluss sicher und stabil an dem Primärverschluss 32 anbringbar.

An den am Gefäßaufsatz 10 angebrachten oder aufgelegten Transponder 5 kann die eingeschlossene Gefäßflüssigkeit 40 auch bei liegender oder anderweitig verdrehter Gefäßorientierung nicht heranreichen und somit die Kommunikation bzw. Auslesbarkeit des Transponders 5 nicht mehr stören oder gefährden.

Selbstverständlich kann die Außenwandung 12 bzw. außenseitige Umfangsfläche 10a des Gefäßaufsatzes 10 auch Luftspalte oder sonstige Aussparungen oder Vertiefungen aufweisen; sei es in axialer Richtung z oder in radialer Richtung nach außen hin. Durch die vorzugsweise runde bzw. zylindrische Form des Gefäß- und/oder Aufsatzumfangs bildet die Umfangsfläche 10a eine stabile Widerlagerfläche, selbst wenn z.B. durch Stöße oder Greifen von außen radialer Druck auf das Etikett 20 und/oder den Transponder 5 ausgeübt wird.

Schließlich bietet die ausreichend groß dimensionierbare Überhöhung, d.h. axiale Verlängerung der kennzeichenbaren Umfangsfläche mittels des Gefäßaufsatzes 10 genügend Platz, um auch die Antennen, Perforationen oder Aufreißstreifen etc. noch großzügiger zu dimensionieren, was die Handhabung nochmals benutzerfreundlicher macht.

Eine optionale, (z.B. als zusätzliche Sensor-Leiterschleife, Leiterstrecke oder sonstige Sensor-Leiterbahn gestaltete) Messleitung 4 kann zumindest abschnittweise in den unteren, ersten Etikettenteil 21 zum Aufbringen auf dem Gefäßkörper 31 hineinreichen und somit über die Perforation 14a bzw. den Aufreißstreifen 14b zwischen beiden Etikettenabschnitten 21, 22 geführt sein.

Falls zwei Transponder 5a, 5b in, an oder unter dem Etikett 20 vorgesehen sind (von denen vorzugsweise der eine nach der Etikettierung auf der Umfangsfläche 30a des Gefäßes 30 und der andere beispielsweise auf der Aufsatzkappe 10 positioniert ist, ist im gefüllten Gefäßzustand nur der am Gefäßaufsatz 10 platzierte Transponder 5a auslesbar, wohingegen im geleerten Zustand vorzugsweise nur der untere Transponder 5b auslesbar bzw. über RFID erfassbar; und zwar dann, wenn ein der Inhalt fast ausgeleert bzw. ein kritischer Füllzustand erreicht ist (s. weiter oben).

Im Falle der Verwendung (zumindest auch) eines kombinierten UHF-NFC-Transponders, welcher sowohl über UHF-Frequenzen als auch über über HF-Frequenzen (z.B. bei 13,56 MHz) kommunizieren oder zumindest ausgelesen werden kann, kann dieser Kombinations-Transponder dank seiner zusätzlichen HF- bzw. NFC-Auslesbarkeit auch direkt auf der Oberfläche bzw. Umfangsfläche 30a des Gefäßkörpers 30 zu liegen kommen; etwa um eine Auslesung mittels Smartphone oder Lesegerät zu ermöglichen, z.B. für Buchungsvorgänge. Inventarprüfungen größerer Mengen an Konfektionierungeinheiten 50 können hingegen zuverlässiger und effizienter mittels einer UHF-Frequenz erfolgen.

Ansonsten wird der Aufreißstreifen 14b oder sonstige Durchtrennungsbereich 14 so gestaltet, dass das Inlay des Etiketts 20 (das inbesondere den oder die Transponder 5; 5a, 5b umfassen kann) beschädigt oder zerstört wird, wodurch eine Auslesung nach erfolgter erstmaliger Öffnung nicht mehr möglich ist.

Im Übrigen kann - je nach Art und Geometrie des pharmazeutischen Gefäßes 30 - der Gefäßaufsatz 10 des Kennzeichnungssatzes 1 auch zweiteilig sein oder einteilig, aber in zwei Teile teilbar sein. Beispielsweise kann - etwa bei einem für eine Spritze gemäß Figur 2 bestimmten Gefäßaufsatz, dieser einen unteren Aufsatzabschnitt, einen oberen Aufsatzabschnitt und in axialer Richtung zwischen beiden Aufsatzabschnitten einen Aufsatz-Durchtrennungsbereich aufweisen, sodass beim Öffnen eines mit dem Gefäßaufsatz 10 versehenen pharmazeutischen Gefäßes 30 z.B. der Aufsatz-Durchtrennungsbereich des Gefäßaufsatzes 10 durchgetrennt wird und der obere Aufsatzabschnitt zusammen mit dem Gefäßaufsatz 10 von dem unteren Aufsatzabschnitt und dem Gefäßkörper 30 abgetrennt wird.

Des Weiteren kann vorgesehen sein, dass der Gefäßaufsatz 10 entweder zweiteilig oder einteilig, aber in zwei Teile teilbar ausgebildet ist und dass der Gefäßaufsatz 10 einen unteren Aufsatzabschnitt, einen oberen Aufsatzabschnitt und in axialer Richtung z zwischen beiden Aufsatzabschnitten einen Aufsatz-Durchtrennungsbereich aufweist, sodass beim Öffnen eines des mit dem Gefäßaufsatz 10 versehenen pharmazeutischen Gefäßes 30 der Aufsatz-Durchtrennungsbereich des Gefäßaufsatzes 10 durchgetrennt wird und der obere Aufsatzabschnitt zusammen mit dem Gefäßaufsatz 10 von dem unteren Aufsatzabschnitt und dem Gefäßkörper 30 abgetrennt wird.

Ferner kann vorgesehen sein, dass der Aufsatz-Durchtrennungsbereich in einer Position am Gefäßaufsatz 10 angeordnet ist, welcher bei Anordnung des Gefäßaufsatzes 10 in der vordefinierten Position an einem zu kennzeichnenden Gefäß 30 die Position eines Übergangs zwischen einem Gefäßkörper 31 und einem Gefäßverschluss 32 des Gefäßes 30 entspricht.

Ferner kann der Gefäßaufsatz 10 eine Ausnehmung aufweisen, die eine Wandung des Gefäßaufsatzs 10 durchdringt, sodass ein Fluid- bzw. Luftaustausch zwischen einem Innenraum und einem Außenraum des Gefäßaufsatzs 10 ermöglicht wird.

Des Weiteren kann eine Klebeschicht an einer Unterseite des Etiketts 20 angeordnet sein, sodass das Etikett 20 durch Kleben an dem Gefäß 30 anordenbar ist, wobei das Etikett 20 in dem Durchtrennungsbereich 14 eine klebstofffreie Fläche aufweist.

Ansonsten kann - wann immer bei einer der Ausführungsformen dieser Anmeldung von dinem RFID-Transponder, einem RFID-Chip, einer RFID-Antenne und/oder der Messleitung die Rede ist - der Transponder, der Chip, die RFID-Antenne und/oder die Messleitung auch auf das Etikett aufgedruckt sein oder aufgedruckt werden, und zwar wahlweise auf die Etikettenrückseite oder auf die Etikettenaußenseite (eines ein- oder mehrlagigen Etiketts mit einer oder mehreren Folien bzw. Folienlagen), oder alternativ auch auf eine von mehreren Folien eines Etiketts, um innerhalb des fertigen Etiketts angeordnet zu werden.

### Bezugszeichenliste

- 1: Kennzeichnungssatz
- 4: Durchtrennungs-Messleitung
- 5: RFID-Transponder
- 5a: erster RFID-Transponder
- 5b: zweiter RFID-Transponder
- 6: Transponder-Chip
- 7: Transponder-Antenne
- 8: UHF-RFID-Transponder
- 9: HF-RFID-Transponder
- 10: Gefäßaufsatz
- 10a: Umfangsfläche
- 11: Innenkontur
- 12: Umfangswandung
- 12a: Umfangsfläche
- 14: Durchtrennungsbereich
- 14a: Perforation
- 14b: Aufreißstreifen
- 20: Etikett
- 21: erster Etikettenabschnitt
- 22: zweiter Etikettenabschnitt
- 30: Gefäß
- 30a: Umfangsfläche
- 30b: Gefäßbauch
- 31: Gefäßkörper
- 32: Gefäßverschluss
- 40: Flüssigkeit
- 50: pharmazeutische Konfektionierungseinheit
- 100: Formteil
- h1: Höhenabschnitt
- h2: weiterer Höhenabschnitt
- z: axiale Richtung

## Patentansprüche

1. Kennzeichnungssatz (1) zum Kennzeichnen eines einen Gefäßkörper (31) mit einem Außenumfang sowie einen abnehmbaren Gefäßverschluss (32) umfassenden pharmazeutischen Gefäßes (30),
wobei der Kennzeichnungssatz (1) zumindest Folgendes umfasst:
- einen als dreidimensionales Formteil (100) ausgebildeten Gefäßaufsatz (10),
- ein Etikett (20) zum Aufkleben auf den Außenumfang eines zu kennzeichnenden pharmazeutischen Gefäßes und
- einen RFID-Transponder (5) zur elektronischen Kennzeichnung eines pharmazeutischen Gefäßes und/oder seines Inhalts,
- wobei das Etikett (20) und/oder der RFID-Transponder (5) dazu bestimmt und ausgestaltet ist, sowohl eine gemäß dem Außenumfang ausgebildete Umfangsfläche (30a) des Gefäßkörpers (30) als auch die Umfangsfläche (10a) des Gefäßaufsatzes (10) zumindest bereichsweise zu überkleben und/oder zu überdecken und/oder den Gefäßaufsatz (10) an dem pharmazeutischen Gefäß (30) zu sichern, wobei der Gefäßaufsatz (10) in vordefinierter Relativposition an dem Gefäß montierbar und/oder positionierbar ist und eine Umfangswandung (12) mit einer außenseitigen Umfangsfläche (10a) aufweist, die als zusätzliche etikettierbare und/oder elektronisch kennzeichenbare Außenwandung und/oder Außenfläche bestimmt ist, **dadurch gekennzeichnet, dass** deren Radius, Außenumfang und/oder Wandungsverlauf derselbe ist wie der Radius, Außenumfang und/oder Wandungsverlauf der Umfangsfläche eines zu kennzeichnenden Gefäßes, sodass ein bündiger oder fluchtender Übergang zwischen der Umfangsfläche (10a) des Gefäßaufsatzes (10) und der Außenfläche des Gefäßkörpers (31) ausgebildet ist, wenn der Kennzeichnungssatz (10) an dem Gefäß (30) angebracht ist.

2. Kennzeichnungssatz (1) nach Anspruch 1, **dadurch gekennzeichnet,**
**dass** der RFID-Transponder (5) mit dem Etikett (20) verbunden, insbesondere verklebt ist, welches zum Aufkleben zumindest auch auf die Umfangsfläche (30a) eines zu kennzeichnenden Gefäßkörpers (31) bestimmt ist.

3. Kennzeichnungssatz (1) nach Anspruch 1 oder 2, **dadurch gekennzeichnet,**
**dass** der RFID-Transponder (5) auf die Umfangsfläche (10a) des Gefäßaufsatzes (10) aufgeklebt ist und/oder mit einem zum Aufkleben und/oder Positionieren auf der Umfangsfläche (10a) des Gefäßaufsatzes (10) bestimmten Etikettenabschnitt (22) des Etiketts (20) verbunden, insbesondere verklebt ist.

4. Kennzeichnungssatz (1) nach einem der Ansprüche 1 bis 3, **dadurch gekennzeichnet,**
**dass** der RFID-Transponder (5) ein UHF-RFID-Transponder (8), insbesondere ein zur Kommunikation mit einer oder mehreren Frequenzen zwischen 860 und 960 MHz bestimmter UHF-RFID-Transponder (8) ist.

5. Kennzeichnungssatz (1) nach einem der Ansprüche 1 bis 4, **dadurch gekennzeichnet,**
**dass** der Kennzeichnungssatz (1) einen ersten RFID-Transponder (5a) und einen zweiten RFID-Transponder (5b) umfasst,
wobei zumindest der erste RFID-Transponder (5a) ein UHF-RFID-Transponder (8) ist, der zum Aufkleben und/oder Positionieren in einem in axialer Richtung (z) definierten Höhenabschnitt (h2) bestimmt ist, in welchem die Umfangswandung (12) und/oder Umfangsfläche (10a) des Gefäßaufsatzes (10), in der vordefinierten Relativposition an einem zu kennzeichnenden Gefäß (30) montiert und/oder angesetzt, angeordnet und/oder noch anzuordnen ist.

6. Kennzeichnungssatz (1) nach einem der Ansprüche 1 bis 5, **dadurch gekennzeichnet,**
**dass** der als dreidimensionales Formteil (100) ausgebildete Gefäßaufsatz (10) zum Aufsetzen und/oder Montieren an einem Gefäß (30) mit einem Gefäßkörper (31) bestimmt ist, dessen Umfangsfläche (30a) über einen Höhenabschnitt (h1) einen vorgegebenen, vorzugsweise konstanten Radius, Außenumfang und/oder Wandungsverlauf besitzt,
wobei die Umfangswandung (12) und/oder Umfangsfläche (10a)
- sich über einen anderen, zusätzlichen Höhenabschnitt (h2) erstreckt, welcher mit dem Höhenabschnitt (h1) der Umfangsfläche (30a) eines bestimmungsgemäß zu kennzeichnenden Gefäßes (30) nicht überlappt und
- einen Radius, Außenumfang und/oder Wandungsverlauf besitzt, der identisch zum Radius, Außenumfang und/oder Wandungsverlauf der Umfangsfläche (30a) in dem Höhenabschnitt (h1) des zu kennzeichnenden Gefäßes (30) gewählt ist.

7. Kennzeichnungssatz (1) nach einem der Ansprüche 1 bis 6, **dadurch gekennzeichnet,**
**dass** der Gefäßaufsatz (10) so geformt ist, dass er in der vordefinierten Relativposition, in der er am Gefäß (30), an dem Gefäßverschluss (32) und/oder an einem den Gefäßverschluss (32) umgebenden Bereich des Gefäßkörpers (31) anzulegen und/oder zu montieren ist, verschlussseitig auf oder oberhalb eines mit maximalem Radius, Außenumfang und/oder Wandungsverlauf gestalteten Gefäßbauches (30b) des Gefäßkörpers (31) verläuft, ohne mit dem Höhenabschnitt (h1) seines Gefäßbauches (30b) zu überlappen und/oder ohne den Gefäßkörper (31) in Höhe (h1) seines Gefäßbauches (30b) zu umgeben, insbesondere ohne ihn zu umstülpen oder zu überstülpen.

8. Kennzeichnungssatz (1) nach einem der Ansprüche 1 bis 7, **dadurch gekennzeichnet,**
**dass** der Kennzeichnungssatz (1) für ein symmetrisch, insbesondere rotationssymmetrisch bzw. zylindrisch geformtes Gefäß (30) und/oder einen so geformten Gefäßkörper bestimmt ist, wobei eine Symmetrieachse eine axiale Richtung (z) des Gefäßes (30) und/oder Gefäßkörpers vorgibt.

9. Kennzeichnungssatz (1) nach einem der Ansprüche 1 bis 8, **dadurch gekennzeichnet,**
**dass** die Umfangswandung (12) und/oder außenseitige Umfangsfläche (10a) des Gefäßaufsatzes (10) als eine zusätzliche Etikettierungsfläche und/oder Kennzeichnungsfläche ausgebildet ist, die in der vordefinierten Relativposition des Gefäßaufsatzes (10) eine Symmetrieachse eines bestimmungsgemäß zu kennzeichnenden Gefäßes (30) und/oder seines Gefäßkörpers (31) umläuft und denselben Durchmesser, Umfang und/oder Wandungsverlauf besitzt wie der Durchmesser, Umfang und/oder Wandungsverlauf eines bestimmungsgemäß zu kennzeichnenden Gefäßes (30), sodass die zylindrischen Umfangsflächen (10a, 30a) des Gefäßaufsatzes (10) und eines damit versehenen Gefäßes relativ zueinander bündig oder zumindest fluchtend verlaufen.

10. Kennzeichnungssatz (1) nach einem der Ansprüche 1 bis 9, **dadurch gekennzeichnet,**
**dass** der Gefäßaufsatz (10), in der vordefinierten Relativposition an ein zu kennzeichnendes Gefäß (30) montiert und/oder daran angesetzt, nach Durchtrennung des Etiketts (20) von dem Gefäßverschluss (32) abnehmbar ist oder gemeinsam mit dem Gefäßverschluss (32) von dem Gefäßkörper (31) abnehmbar ist.

11. Kennzeichnungssatz (1) nach einem der Ansprüche 1 bis 10, **dadurch gekennzeichnet,**
**dass** der RFID-Transponder (5) ein UHF-RFID-Transponder (8) ist, der einen UHF-RFID-Chip und eine UHF-RFID-Antenne umfasst.

12. Kennzeichnungssatz (1) nach einem der Ansprüche 1 bis 11, **dadurch gekennzeichnet,**
**dass** das Etikett (20) Folgendes aufweist:
- einen ersten Etikettenabschnitt (21) zum Aufkleben und/oder Auflegen auf die Umfangsfläche (30a) des Gefäßkörpers (31),
- einen zweiten Etikettenabschnitt (22) zum Aufkleben und/oder Auflegen auf die Umfangsfläche (10a) des Gefäßaufsatzes (10) und
- einen zwischen beiden Etikettenabschnitten (21, 22) angeordneten Durchtrennungsbereich (14), der bestimmungsgemäß beim Öffnen eines mit dem Kennzeichnungssatz (1) versehenen Gefäßes (30) beschädigt oder zerstört wird.

13. Kennzeichnungssatz (1) nach einem der Ansprüche 1 bis 12, **dadurch gekennzeichnet, dass** der Gefäßaufsatz (10)
- zweiteilig oder
- einteilig, aber in zwei Teile teilbar ausgebildet ist und
- wobei der Gefäßaufsatz (10) einen unteren Aufsatzabschnitt, einen oberen Aufsatzabschnitt und in axialer Richtung (z) zwischen beiden Aufsatzabschnitten einen Aufsatz-Durchtrennungsbereich aufweist, sodass beim Öffnen eines mit dem Gefäßaufsatz (10) versehenen pharmazeutischen Gefäßes (30) der Aufsatz-Durchtrennungsbereich des Gefäßaufsatzes (10) durchgetrennt wird und der obere Aufsatzabschnitt zusammen mit dem Gefäßaufsatz (10) von dem unteren Aufsatzabschnitt und dem Gefäßkörper (30) abgetrennt wird und/oder abtrennbar ist.

14. Kennzeichnungssatz (1) nach Anspruch 13, **dadurch gekennzeichnet, dass** der Aufsatz-Durchtrennungsbereich in einer Position am Gefäßaufsatz (10) angeordnet ist, welcher bei Anordnung des Gefäßaufsatzes (10) in der vordefinierten Position an einem zu kennzeichnenden Gefäß (30) die Position eines Übergangs zwischen dem Gefäßkörper (31) und em Gefäßverschluss (32) eines zu kennzeichnenden Gefäßes (30) entspricht.

15. Pharmazeutische Konfektionierungseinheit (50), umfassend:
- ein pharmazeutisches Gefäß (30), das einen Gefäßkörper (31) mit einer Umfangsfläche (30a) und einen abnehmbaren Gefäßverschluss (32) aufweist,
- einen Kennzeichnungssatz (1) nach einem der Ansprüche 1 bis 14, der einen Gefäßaufsatz (10), ein Etikett (20) und einen RFID-Transponder (5) umfasst,
- wobei der Gefäßaufsatz (10) in einer vordefinierten Relativposition an dem Gefäß (10) montiert und/oder positioniert ist, wodurch seine Umfangswandung (12) und/oder außenseitige Umfangsfläche (10a) bündig oder zumindest fluchtend zum Gefäßbauch (30b) und/oder zur Umfangsfläche (30a) des Gefäßkörpers (31) angeordnet ist,
- wobei das Etikett (20) teilweise auf die Umfangsfläche (30a) des Gefäßkörpers (31) und teilweise auf die Umfangsfläche (10a) des Gefäßaufsatzes (10) aufgeklebt und/oder aufgelegt ist und
- wobei der RFID-Transponder (5) an dem pharmazeutischen Gefäß (30), an dem Gefäßaufsatz (10) und/oder an oder in dem Etikett (20) angeordnet ist.

## Claims

1. Identification kit (1) for identifying a pharmaceutical vessel (30) comprising a vessel body (31) having an outer circumference and a removable vessel closure (32),
wherein the identification kit (1) comprises at least the following:
- a vessel attachment (10) designed as a three-dimensional molded part (100),
- a label (20) for affixing to the outer circumference of a pharmaceutical vessel to be identified, and
- an RFID transponder (5) for electronically identifying a pharmaceutical vessel and/or its contents,
- wherein the label (20) and/or the RFID transponder (5) are intended and configured to be affixed to and/or conceal at least in part both a circumferential surface (30a) of the vessel body (30) formed in accordance with the outer circumference and the circumferential surface (10a) of the vessel attachment (10) and/or secure the vessel attachment (10) to the pharmaceutical vessel (30), wherein the vessel attachment (10) can be mounted and/or positioned in a predefined relative position on the vessel and comprises a circumferential wall (12) having an outer circumferential surface (10a) which is intended as an additional labelable and/or electronically identifiable outer wall and/or outer surface, **characterized in that** the radius, the outer circumference and/or the wall configuration is the same as the radius, the outer circumference and/or the wall configuration of the circumferential surface of a vessel to be identified, so that a flush or aligned transition is formed between the circumferential surface (10a) of the vessel attachment (10) and the outer surface of the vessel body (31) if the identification kit (10) is attached to the vessel (30).

2. The identification kit (1) according to claim 1, **characterized in that**
the RFID transponder (5) is connected, in particular glued to the label (20), which is intended to be affixed at least also to the circumferential surface (30a) of a vessel body (31) to be identified.

3. The identification kit (1) according to claim 1 or 2, **characterized in that**
the RFID transponder (5) is affixed to the circumferential surface (10a) of the vessel attachment (10) and/or is connected, in particular glued to a label section (22) of the label (20) intended for being affixed and/or positioned on the circumferential surface (10a) of the vessel attachment (10).

4. The identification kit (1) according to any one of claims 1 to 3, **characterized in that**
the RFID transponder (5) is a UHF RFID transponder (8), in particular a UHF RFID transponder (8) intended for communication with one or more frequencies between 860 and 960 MHz.

5. The identification kit (1) according to any one of claims 1 to 4, **characterized in that**
the identification kit (1) comprises a first RFID transponder (5a) and a second RFID transponder (5b),
wherein at least the first RFID transponder (5a) is a UHF RFID transponder (8) which is intended for being affixed and/or positioned in a height section (h2) defined in axial direction (z), in which the circumferential wall (12) and/or the circumferential surface (10a) of the vessel attachment (10), mounted and/or attached in the predefined relative position on a vessel (30) to be identified, is arranged and/or still to be arranged.

6. The identification kit (1) according to any one of claims 1 to 5, **characterized in that**
the vessel attachment (10) designed as a three-dimensional molded part (100) is intended for being attached and/or mounted on a vessel (30) having a vessel body (31) whose circumferential surface (30a) has a predetermined, preferably constant radius, outer circumference, and/or wall configuration across a height section (h1),
wherein the circumferential wall (12) and/or the circumferential surface (10a)
- extend across another, additional height section (h2) which does not overlap with the height section (h1) of the circumferential surface (30a) of a vessel (30) to be identified as intended, and
- have a radius, an outer circumference and/or a wall configuration that is identical to the radius, the outer circumference and/or the wall configuration of the circumferential surface (30a) in the height section (h1) of the vessel (30) to be identified.

7. The identification kit (1) according to any one of claims 1 to 6, **characterized in that**
the vessel attachment (10) is shaped such that, in the predefined relative position in which it is to be attached and/or mounted on the vessel (30), on the vessel closure (32) and/or on an area of the vessel body (31) surrounding the vessel closure (32), it extends on the closure side on or above a vessel waist (30b) of the vessel body (31) designed with a maximum radius, outer circumference and/or wall configuration without overlapping the height section (h1) of its vessel waist (30b) and/or without surrounding the vessel body (31) at the height (h1) of its vessel waist (30b), in particular without upending or inverting it.

8. The identification kit (1) according to any one of claims 1 to 7, **characterized in that**
the identification kit (1) is intended for a symmetrical, in particular rotationally symmetrical or cylindrical vessel (30) and/or a vessel body of such a shape, wherein an axis of symmetry defines an axial direction (z) of the vessel (30) and/or vessel body.

9. The identification kit (1) according to any one of claims 1 to 8, **characterized in that**
the circumferential wall (12) and/or outer circumferential surface (10a) of the vessel attachment (10) is designed as an additional labeling surface and/or identification surface, which, in the predefined relative position of the vessel attachment (10), surrounds an axis of symmetry of a vessel (30) and/or its vessel body (31) to be identified as intended and has the same diameter, circumference, and/or wall configuration as the diameter, circumference, and/or wall configuration of a vessel (30) to be identified as intended, so that the cylindrical circumferential surfaces (10a, 30a) of the vessel attachment (10) and of a vessel provided therewith are flush with each other or at least aligned.

10. The identification kit (1) according to any one of claims 1 to 9, **characterized in that**
the vessel attachment (10), mounted on a vessel (30) to be identified in the predefined relative position and/or attached thereto, can be removed from the vessel closure (32) after the label (20) has been severed, or can be removed together with the vessel closure (32) from the vessel body (31).

11. The identification kit (1) according to any one of claims 1 to 10, **characterized in that**
the RFID transponder (5) is a UHF RFID transponder (8) comprising a UHF RFID chip and a UHF RFID antenna.

12. The identification kit (1) according to any one of claims 1 to 11, **characterized in that** the label (20) comprises:
- a first label section (21) for affixing and/or placing on the circumferential surface (30a) of the vessel body (31),
- a second label section (22) for affixing and/or placing on the circumferential surface (10a) of the vessel attachment (10), and
- a severing area (14) arranged between the two label sections (21, 22), which is designed to be damaged or destroyed as intended when a vessel (30) provided with the identification kit (1) is opened.

13. The identification kit (1) according to any one of claims 1 to 12, **characterized in that** the vessel attachment (10)
- is two-part or
- is one-part but can be divided into two parts, and
- wherein the vessel attachment (10) has a lower attachment section, an upper attachment section and, in the axial direction (z) between the two attachment sections, an attachment severing area, so that when a pharmaceutical vessel (30) provided with the vessel attachment (10) is opened, the attachment severing area of the vessel attachment (10) is severed and the upper attachment section together with the vessel attachment (10) is separated and/or can be separated from the lower attachment section and the vessel body (30).

14. The identification kit (1) according to claim 13, **characterized in that** the attachment severing area is arranged in a position on the vessel attachment (10) which, when the vessel attachment (10) is arranged in the predefined position on a vessel (30) to be identified, corresponds to the position of a transition between the vessel body (31) and the vessel closure (32) of a vessel (30) to be identified.

15. Pharmaceutical packaging unit (50), comprising:
- a pharmaceutical vessel (30) comprising a vessel body (31) having a circumferential surface (30a) and a removable vessel closure (32),
- an identification kit (1) according to any one of claims 1 to 14, comprising a vessel attachment (10), a label (20) and an RFID transponder (5),
- wherein the vessel attachment (10) is mounted and/or positioned in a predefined relative position on the vessel (10), whereby its circumferential wall (12) and/or outer circumferential surface (10a) is arranged flush or at least aligned with the vessel waist (30b) and/or with the circumferential surface (30a) of the vessel body (31),
- wherein the label (20) is partially affixed and/or placed on the circumferential surface (30a) of the vessel body (31) and partially to the circumferential surface (10a) of the vessel attachment (10), and
- wherein the RFID transponder (5) is arranged on the pharmaceutical vessel (30), on the vessel attachment (10) and/or on or in the label (20).

## Revendications

1. Ensemble de caractérisation (1) destiné à caractériser un récipient (30) pharmaceutique comprenant un corps de récipient (31) avec un périmètre extérieur ainsi qu'un dispositif de fermeture de récipient (32) amovible,
sachant que l'ensemble de caractérisation (1) comprend au moins ce qui suit :
- un embout de récipient (10) constitué comme une pièce façonnée (100) tridimensionnelle,
- une étiquette (20) destinée à être collée sur le périmètre extérieur d'un récipient pharmaceutique à caractériser et
- un transpondeur RFID (5) destiné à caractériser électroniquement un récipient pharmaceutique et/ou son contenu,
- sachant que l'étiquette (20) et/ou le transpondeur RFID (5) est déterminé(e) et configuré(e) pour recouvrir au moins partiellement, par collage et/ou recouvrement, tant une surface périphérique (30a) du corps de récipient (30), constituée selon le périmètre extérieur, que la surface périphérique (10a) de l'embout de récipient (10) et/ou pour sécuriser l'embout de récipient (10) sur le récipient (30) pharmaceutique, sachant que l'embout de récipient (10) est montable et/ou positionnable en position relative prédéfinie sur le récipient et présente une paroi périphérique (12) avec une surface périphérique (10a) extérieure qui est destinée à être une paroi extérieure et/ou une surface extérieure supplémentaire pouvant être étiquetée et/ou caractérisée de manière électronique, caractérisé(e) en ce que son rayon, son périmètre extérieur et/ou son profil de paroi sont identiques au rayon, au périmètre extérieur et/ou au profil de paroi de la surface périphérique d'un récipient à caractériser, de sorte qu'une jonction affleurante ou alignée soit constituée entre la surface périphérique (10a) de l'embout de récipient (10) et la surface extérieure du corps de récipient (31) lorsque l'ensemble de caractérisation (10) est appliqué sur le récipient.

2. Ensemble de caractérisation (1) selon la revendication 1, **caractérisé en ce que**
le transpondeur RFID (5) est relié, en particulier assemblé par collage, à l'étiquette (20), qui est destinée à être collée au moins aussi sur la surface périphérique (30a) d'un corps de récipient (31) à caractériser.

3. Ensemble de caractérisation (1) selon la revendication 1 ou 2, **caractérisé en ce que**
le transpondeur RFID (5) est collé sur la surface périphérique (10a) de l'embout de récipient (10) et/ou est relié, en particulier assemblé par collage, à un segment d'étiquette (22) de l'étiquette (20), lequel est destiné à être collé et/ou positionné sur la surface périphérique (10a) de l'embout de récipient (10).

4. Ensemble de caractérisation (1) selon l'une des revendications 1 à 3, **caractérisé en ce que**
le transpondeur RFID (5) est un transpondeur RFID UHF (8), en particulier un transpondeur RFID UHF (8) destiné à la communication avec une ou plusieurs fréquences comprises entre 860 et 960 MHz.

5. Ensemble de caractérisation (1) selon l'une des revendications 1 à **4, caractérisé en ce que**
l'ensemble de caractérisation (1) comprend un premier transpondeur RFID (5a) et un deuxième transpondeur RFID (5b),
sachant qu'au moins le premier transpondeur RFID (5a) est un transpondeur RFID UHF (8) qui est destiné à être collé et/ou positionné dans un segment de hauteur (h2) défini en direction axiale (z), dans lequel la paroi périphérique (12) et/ou la surface périphérique (10a) de l'embout de récipient (10) est montée et/ou apposée, disposée et/ou destinée à être encore disposée sur un récipient (30) à caractériser dans la position relative prédéfinie.

6. Ensemble de caractérisation (1) selon l'une des revendications 1 à 5, **caractérisé en ce que**
l'embout de récipient (10) constitué comme une pièce façonnée (100) tridimensionnelle est destiné à être posé et/ou monté sur un récipient (30) comprenant un corps de récipient (31) dont la surface périphérique (30a) présente, sur un segment de hauteur (h1), un rayon, un périmètre extérieur et/ou un profil de paroi prédéfinis, de préférence constants,
sachant que la paroi périphérique (12) et/ou la surface périphérique (10a)
- s'étendent sur un autre segment de hauteur (h2) supplémentaire, lequel ne chevauche pas le segment de hauteur (h1) de la surface périphérique (30a) d'un récipient (30) à caractériser conformément à sa destination et
- présentent un rayon, un périmètre extérieur et/ou un profil de paroi qui sont choisis de manière à être identiques au rayon, au périmètre extérieur et/ou au profil de paroi de la surface périphérique (30a) dans le segment de hauteur (h1) du récipient (30) à caractériser.

7. Ensemble de caractérisation (1) selon l'une des revendications 1 à 6, **caractérisé en ce que**
l'embout de récipient (10) est formé de manière à s'étendre, dans la position relative prédéfinie dans laquelle il est destiné à être appliqué et/ou monté sur le récipient (30), sur le dispositif de fermeture de récipient (32) et/ou sur une zone du corps de récipient (31) entourant le dispositif de fermeture de récipient (32), du côté du dispositif de fermeture sur ou au-dessus d'un renflement de récipient (30b) du corps de récipient (31), lequel est configuré avec un rayon, un périmètre extérieur et/ou un profil de paroi maximal, sans chevaucher le segment de hauteur (h1) de son renflement de récipient (30b) et/ou sans entourer le corps de récipient (31) à hauteur (h1) de son renflement de récipient (30b), en particulier sans le retourner ni le recouvrir.

8. Ensemble de caractérisation (1) selon l'une des revendications 1 à 7, **caractérisé en ce que**
l'ensemble de caractérisation (1) est destiné à un récipient (30) de forme symétrique, en particulier symétrique en rotation ou cylindrique, et/ou à un corps de récipient formé de la sorte, sachant qu'un axe de symétrie définit une direction axiale (z) du récipient (30) et/ou du corps de récipient.

9. Ensemble de caractérisation (1) selon l'une des revendications 1 à 8, **caractérisé en ce que**
la paroi périphérique (12) et/ou la surface périphérique (10a) extérieure de l'embout de récipient (10) est constituée comme une surface d'étiquetage et/ou une surface de caractérisation supplémentaire qui, dans la position relative prédéfinie de l'embout de récipient (10), entoure un axe de symétrie d'un récipient (30) à caractériser conformément à sa destination et/ou de son corps de récipient (31) et présente le même diamètre, périmètre et/ou profil de paroi que le diamètre, périmètre et/ou profil de paroi d'un récipient (30) à caractériser conformément à sa destination, de sorte que les surfaces périphériques (10a, 30a) cylindriques de l'embout de récipient (10) et d'un récipient muni de celui-ci s'étendent de manière affleurante ou au moins alignée l'une par rapport à l'autre.

10. Ensemble de caractérisation (1) selon l'une des revendications 1 à 9, **caractérisé en ce que**
l'embout de récipient (10), monté et/ou appliqué dans la position relative prédéfinie sur un récipient (30) à caractériser, est amovible après séparation de l'étiquette (20) par rapport au dispositif de fermeture de récipient (32) ou est amovible conjointement avec le dispositif de fermeture de récipient (32) par rapport au corps de récipient (31).

11. Ensemble de caractérisation (1) selon l'une des revendications 1 à 10, **caractérisé en ce que**
le transpondeur RFID (5) est un transpondeur RFID UHF (9) qui comprend une puce RFID UHF et une antenne RFID UHF.

12. Ensemble de caractérisation (1) selon l'une des revendications 1 à 11, **caractérisé en ce que** l'étiquette (20) présente ce qui suit :
- un premier segment d'étiquette (21) destiné à être collé et/ou appliqué sur la surface périphérique (30a) du corps de récipient (31),
- un deuxième segment d'étiquette (22) destiné à être collé et/ou appliqué sur la surface périphérique (10a) de l'embout de récipient (10) et
- une zone de séparation (14) disposée entre les deux segments d'étiquette (21, 22), qui est, conformément à sa destination, endommagée ou détruite lors de l'ouverture d'un récipient (30) muni de l'ensemble de caractérisation (1).

13. Ensemble de caractérisation (1) selon l'une des revendications 1 à 12, **caractérisé en ce que** l'embout de récipient (10)
- est constitué en deux parties ou
- est constitué en une partie mais séparable en deux parties et
- sachant que l'embout de récipient (10) comprend un segment d'embout inférieur, un segment d'embout supérieur et, en direction axiale (z) entre les deux segments d'embout, une zone de séparation d'embout de sorte que, lors de l'ouverture d'un récipient (30) pharmaceutique muni de l'embout de récipient (10), la zone de séparation d'embout de l'embout de récipient (10) soit séparée et le segment d'embout supérieur soit détaché et/ou détachable du segment d'embout inférieur et du corps de récipient (30).

14. Ensemble de caractérisation (1) selon la revendication 13, **caractérisé en ce que** la zone de séparation d'embout est disposée, sur l'embout de récipient (10), à une position qui correspond, lorsque l'embout de récipient (10) est placé dans la position prédéfinie sur un récipient (30) à caractériser, à la position d'une jonction entre le corps de récipient (31) et le dispositif de fermeture de récipient (32) d'un récipient (30) à caractériser.

15. Unité de conditionnement pharmaceutique (50), comprenant :
- un récipient (30) pharmaceutique qui présente un corps de récipient (31) présentant une surface périphérique (30a) et un dispositif de fermeture de récipient (32) amovible,
- un ensemble de caractérisation (1) selon l'une des revendications 1 à 14, qui comprend un embout de récipient (10), une étiquette (20) et un transpondeur RFID (5),
- sachant que l'embout de récipient (10) est monté et/ou positionné sur le récipient (10) dans une position relative prédéfinie, suite à quoi sa paroi périphérique (12) et/ou sa surface périphérique (10a) extérieure est disposée de manière affleurante ou au moins alignée avec le renflement de récipient (30b) et/ou la surface périphérique (30a) du corps de récipient (31),
- sachant que l'étiquette (20) est collée et/ou appliquée partiellement sur la surface périphérique (30a) du corps de récipient (31) et partiellement sur la surface périphérique (10a) de l'embout de récipient (10) et
- sachant que le transpondeur RFID (5) est disposé sur le récipient (30) pharmaceutique, sur l'embout de récipient (10) et/ou sur ou dans l'étiquette (20).
